# EUROPEAN PATENT APPLICATION

(11) **EP 4 648 312 A1**
(43) Date of publication of application: **12.11.2025**
(21) Application number: 23931771.2
(22) Date of filing: 06.11.2023
(51) Int. Cl.: H04B 17/391

(54) **DATA SET SENDING AND RECEIVING METHODS, AND COMMUNICATION SYSTEM, COMMUNICATION APPARATUS AND STORAGE MEDIUM**

(30) Priority: 07.04.2023 CN 202310404216
(71) Applicant: ZTE Corporation, Shenzhen, Guangdong 518057 (CN)
(72) Inventor: XIAO, Huahua, Shenzhen, Guangdong 518057 (CN); LU, Zhaohua, Shenzhen, Guangdong 518057 (CN); ZHENG, Guozeng, Shenzhen, Guangdong 518057 (CN); LIU, Wenfeng, Shenzhen, Guangdong 518057 (CN)
(74) Representative: Ziebig Hengelhaupt Intellectual Property Attorneys Patentanwaltskanzlei PartGmbB
(86) International application number: PCT/CN2023/129936
(87) International publication number: WO 2024/207724

(57) **Abstract**

Provided in the present disclosure are data set sending and receiving methods, and a communication system, a communication apparatus and a storage medium. The data set sending method comprises: acquiring N samples and K parameter threshold groups; determining a data set from the N samples according to the K parameter threshold groups, wherein the data set comprises M samples, M, N and K being positive integers, and N being greater than or equal to M; and sending the data set.

## Description

The present disclosure claims a priority to Chinese Patent Application No. 202310404216.3, filed on April 7, 2023, which is hereby incorporated by reference in its entirety.

### TECHNICAL FIELD

The present disclosure relates to the technical field of communications, and in particular, to data set sending and receiving methods, a communication system, a communication apparatus, and a storage medium.

### BACKGROUND

Wireless communication systems are widely used in people's daily life and production. For example, the wireless communication systems are applied to video transmission, voice transmission, positioning, machine-to-machine (M2M) communication in industrial fields, device-to-device (D2D) communication, and communication between cars and other devices in the Vehicle to Everything (V2X). And, more and wider applications have also put forward increasingly higher requirements on transmission reliability, capacity, transmission rate, etc., for the wireless communication technologies, while also driving the rapid development of the wireless communication field.

### SUMMARY

In a first aspect, a data set sending method is provided in the embodiments of the present disclosure, the method is applied to a first node. The method includes:
acquiring N samples and K parameter threshold groups;
determining a data set from the N samples according to the K parameter threshold groups, where the data set includes M samples; M, N and K are positive integers, N is greater than or equal to M; and
sending the data set.

In a second aspect, a data set receiving method is provided in the embodiments of the present disclosure, the method is applied to a second node. The method includes:
receiving a data set, where the data set includes M samples, where the data set is determined from N samples based on K parameter threshold groups, M, N and K are positive integers, and N is greater than or equal to M.

In a third aspect, a communication apparatus is provided in the embodiments of the present disclosure, and is located at a first node. The communication apparatus includes:
an acquisition unit, configured to acquire N samples and K parameter threshold groups;
a processing unit, configured to determine a data set from the N samples according to the K parameter threshold groups, where the data set includes M samples; M, N and K are positive integers, and N is greater than or equal to M;
a sending unit, configured to send the data set.

In a fourth aspect, a communication apparatus is provided in the embodiments of the present disclosure, and is located at a second node. The communication apparatus includes:
a receiving unit, configured to receive a data set, the data set includes M samples, the data set is determined from N samples based on K parameter threshold groups, M, N and K are positive integers, and N is greater than or equal to M.

In a fifth aspect, a communication apparatus is provided in the embodiments of the present disclosure. The communication apparatus includes: a memory and a processor, where the memory stores instructions executable for the processor, and the processor is configured, upon executing instructions, to enable the communication apparatus to perform the method according to any one of above-mentioned first aspect or second aspect.

In a sixth aspect, a communication system is provided in the embodiments of the present disclosure. The communication system includes: at least one first node and at least one second node, the first node is configured to perform the method according to any one of above-mentioned first aspect or second aspect, and the second node is configured to perform the method according to any one of above-mentioned first aspect or second aspect.

In a seventh aspect, a computer-readable storage medium is provided in the embodiments of the present disclosure. The computer-readable storage medium stores computer instructions that, upon being run on a computer, enable the computer to perform the method according to any one of above-mentioned first aspect or second aspect.

In an eighth aspect, a computer program product including computer instructions is provided in the embodiments of the present disclosure. In response that the computer instructions are run on a computer, the computer is enabled to perform the method according to any one of above-mentioned first aspect or second aspect.

### BRIEF DESCRIPTION OF THE DRAWINGS

Accompanying drawings are used to provide a further understanding of technical solutions of the present disclosure, and are constituted as a part of the specification. The accompanying drawings are used to explain the technical solutions of the present disclosure together with the embodiments of the present disclosure, and do not constitute a limitation on the technical solutions of the present disclosure.
FIG. 1 is a schematic diagram of an architecture of a communication system according to some embodiments.
FIG. 2 is a flowchart of a data set sending method according to some embodiments.
FIG. 3 is a flowchart of a data set receiving method according to some embodiments.
FIG. 4 is a schematic diagram of a composition of a communication apparatus according to some embodiments.
FIG. 5 is a schematic diagram of a composition of another communication apparatus according to some embodiments.
FIG. 6 is a structural schematic diagram of a communication apparatus according to some embodiments.

### DETAILED DESCRIPTION

In order to enable those skilled in the art to better understand the technical solutions in the embodiments of the present disclosure, the technical solutions in the embodiments of present disclosure will be described clearly and completely in conjunction with the accompanying drawings. Obviously, the described embodiments are merely a part of embodiments of the present disclosure, but not all of embodiments of the present disclosure. All other embodiments obtained based on the embodiments of the present disclosure by those of ordinary skill in the art without paying any creative effort shall belong to the protection scope of the present disclosure.

In the description of the present disclosure, unless otherwise specified, "/" means an "or" relationship, for example, "A/B" may represent A or B. The term "and/or" in the description merely represents a relevant relationship for describing related objects, which represents that there may be three relationships. For example, A and/or B may represent: only A; only B; or both A and B. In addition, "at least one" means one or more, and "plurality" means two or more. The wordings, such as "first" and "second" do not limit a quantity or an execution order, and the wordings such as "first" and "second" do not limit that objects are different, either.

It should be noted that in the present disclosure, wordings, such as "exemplarily" or "for example" and variations thereof are used to indicate examples, illustrations, or clarifications. Any embodiment or design solution described in the present disclosure as "exemplarily" or "for example" should not be illustrated as being more preferred or advantageous over other embodiments or design solutions. Specifically, the usage of the wordings such as "exemplarily" or "for example" is intended to present relevant concepts in a concrete way.

The technical solution provided in the embodiments of the present disclosure may be applied to various mobile communication networks, for example, new radio (NR) mobile communication networks using the 5th generation mobile networks (5G), future mobile communication networks, or a convergence system of multiple communication technologies, etc., which are not limited in the embodiments of the present disclosure.

A network architecture of a mobile communication network (including but not limited to 3G, 4G, 5G and future mobile communication networks) in the embodiments of the present disclosure may include a network-side device (for example, including but not limited to a base station) and a receiving-side device (for example, including but not limited to a terminal). It should be understood that, in this example, in a downlink, a first communication node (also referred to as a first communication node device) may be a base station side device, and a second communication node (also referred to as a second communication node device) may be a terminal side device. Of course, in an uplink, the first communication node may also be a terminal side device, and the second communication node may also be a base station side device. In a case where two communication nodes perform device-to-device communication, both the first communication node and the second communication node may be base stations or terminals. The first communication node and the second communication node may be abbreviated as the first node and the second node, respectively.

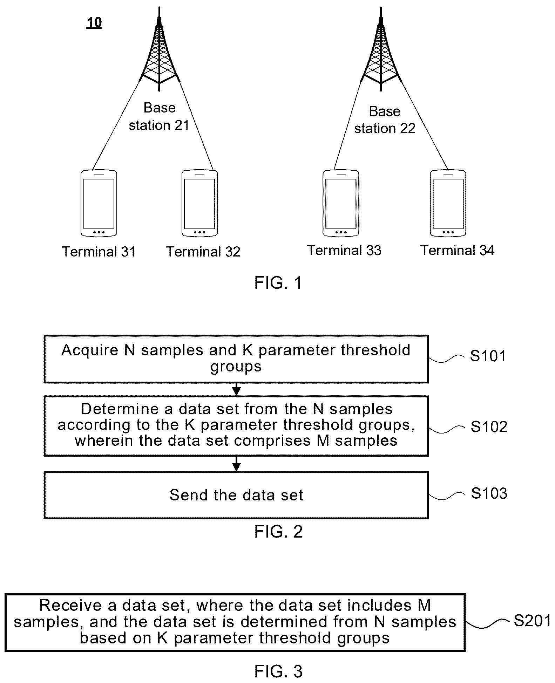

Exemplarily, taking the network-side device as a base station and the receiving-side device as a terminal as an example, FIG. 1 is a schematic diagram of an architecture of a communication system according to some embodiments. As shown in FIG. 1, the communication system 10 includes a plurality of base stations (e.g., a base station 21 and a base station 22) and a plurality of terminals (e.g., a terminal 31, a terminal 32, a terminal 33, and a terminal 34). The plurality of base stations and the plurality of terminals may be in communication connection.

In some embodiments, a base station is configured to provide wireless access services to the plurality of terminals. For example, a base station provides a service coverage area (also referred to as a cell). A terminal entering the area may communicate with the base station via a wireless signal to receive a wireless access service provided by the base station. There may be an overlap between service coverage areas of the base station 21, and a terminal in the overlapped area may receive wireless signals from the plurality of base stations.

In some embodiments, a base station may be connected to the plurality of terminal devices, for example, the base station 21 is connected to the terminal 31 and the terminal 32. The terminal 31 and the terminal 32 may be located in a same cell, or the terminal 31 and the terminal 32 may be located in different cells. That is, a base station may provide network services to terminals in a cell, and may further provide network services to terminals in a plurality of cells at the same time.

In some embodiments, a base station may be a base station or an evolutional base station (e.g., an evolutional node B (eNB or eNodeB)) in long term evolution (LTE), long term evolution advanced (LTEA), a base station in a 5G network, or a base station in a future communication system, etc. The base station may include various macro base stations, micro base stations, home base stations, remote radio units (RRUs), reconfigurable intelligent surfaces (RISs), routers, wireless fidelity (WIFI) devices, or various network-side devices in, e.g., primary cells and secondary cells.

In some embodiments, a terminal may be a device with wireless transceiving functions, which may be deployed on land (e.g., indoor or outdoor, handheld, wearable or vehicle-mounted); may also be deployed on the water surface (e.g., on a ship, etc.); may further be deployed in the air (e.g., on an airplane, balloon and satellite, etc.). The terminal may be a mobile phone, a pad, a computer with wireless transceiving functions, a virtual reality (VR) terminal, an augmented reality (AR) terminal, a wireless terminal in industrial control, a wireless terminal in self driving, a wireless terminal in remote medical, a wireless terminal in smart grid, a wireless terminal in transportation safety, a wireless terminal in smart city, a wireless terminal in smart home, etc. The application scenarios are not limited in the embodiments of the present disclosure. The terminal, sometimes, may also be referred to as a user, a user equipment (UE), an access terminal, a UE unit, a UE station, a mobile station, a mobile platform, a remote station, a remote terminal, a mobile device, a UE terminal, a wireless communication device, a UE agent, a UE apparatus, etc., which is not limited in the embodiments of the present disclosure.

In some embodiments, a higher layer signaling includes, but is not limited to, radio resource control (RRC), media access control-control element (MAC CE), or other higher layer (above a physical layer) signalings. A physical layer signaling includes, but is not limited to: downlink control information and uplink control information. As an example, a physical layer signaling may be transmitted between a base station and a terminal on a physical downlink control channel (PDCCH) or on a physical uplink control channel (PUCCH).

In some embodiments, an indicator of a parameter may also be referred to as an index or an identifier (ID), and the concepts of indicator, identifier and index are equivalent. For example, a resource identifier of a wireless system may also be referred to as a resource indicator or a resource index. A resource of the wireless system includes, but is not limited to one of the following: identifiers corresponding to a reference signal resource, a reference signal resource group, a reference signal resource configuration, a channel state information (CSI) report, a CSI report set, a terminal, a base station, a panel, a neural network, a sub-neural network, a neural network layer, etc. The base station may indicate an identifier of a resource or a group of resources to the terminal through various higher layer signalings or physical layer signalings. The terminal may feed back an identifier of a resource or a group of resources to the base station through various higher layer signalings and/or physical layer signalings.

In some embodiments, a slot may be a slot or a mini slot. A slot or a mini slot includes at least one symbol. A symbol refers to a time unit for a subframe or a frame or a slot, for example, may be an orthogonal frequency division multiplexing (OFDM) symbol, a single-carrier frequency division multiple access (SC-FDMA) symbol, or an orthogonal frequency division multiple access (OFDMA) symbol.

In some embodiments, transmission includes sending or receiving, for example, sending data or signals, or receiving data or signals.

In some embodiments, in order to calculate channel state information or perform channel estimation, mobility management, positioning, etc., a base station or a user needs to send a reference signal (RS). A reference signal includes, but is not limited to, a channel-state information reference signal (CSI-RS) (for example, including a zero-power CSI-RS (ZP CSI-RS) or a non-zero-power CSI-RS (NZP CSI-RS)), a channel state information-interference measurement (CSI-IM), a sounding reference signal (SRS), a synchronization signals block (SSB), a physical broadcast channel (PBCH), or a synchronization signal block/physical broadcast channel (SSB/PBCH). The NZP CSI-RS may be used to measure a channel or interference. The CSI-RS may also be used for tracking, which is referred to as a reference signal for tracking (e.g., a CSI-RS for Tracking (TRS)). The CSI-IM is generally used to measure interference. SRS is used for channel estimation. In addition, a set of resource elements (RE) included in a time-frequency resource for transmitting a reference signal is referred to as a reference signal resource, for example, a CSI-RS resource, an SRS resource, a CSI-IM resource, and an SSB resource. In the document, SSB includes a synchronization signal block and/or a physical broadcast channel.

In some embodiments, in order to save signaling overhead, etc., multiple reference signal resources may be divided into multiple sets (e.g., a CSI-RS resource set, a CSI-IM resource set, an SRS resource set), and a reference signal resource set includes at least one reference signal resource, and multiple reference signal resource sets may all come from a same reference signal resource setting (e.g., a CSI-RS resource setting, an SRS resource setting, where the CSI-RS resource setting may be merged with the CSI-IM resource setting, which are both referred to as the CSI-RS resource setting) to configure parameter information.

In some embodiments, the base station configures measurement resource information, and the measurement resource information is used to acquire various measurement parameters such as channel state information. The measurement resource information includes CN pieces of channel measurement resource (CMR) information and/or CM pieces of interference measurement resource (IMR) information, where CN and CM are positive integers. The base station configures measurement resource information in a report configuration (Report Config) or a reporting setting. In some examples, a piece of channel measurement resource information includes at least one channel reference signal resource setting, for example, at least one CSI-RS resource setting or at least one SRS resource setting. A piece of interference measurement resource information includes at least one interference reference signal resource setting, for example, at least one CSI-IM resource setting. In some examples, a piece of channel measurement resource information includes at least one channel reference signal resource set, for example, at least one CSI-RS resource set or at least one SRS resource set. A piece of interference measurement resource information includes at least one interference reference signal resource set, for example, at least one CSI-IM resource set. In some examples, a piece of channel measurement resource information includes at least one channel reference signal resource, for example, at least one CSI-RS resource or at least one SRS resource. A piece of interference measurement resource information includes at least one interference reference signal resource, for example, at least one CSI-IM resource.

In some embodiments, a beam includes a sending beam, a receiving beam, a pair of a receiving beam and a sending beam and a pair of a sending beam and a receiving beam. In some embodiments, a beam may be understood as a kind of resource, for example, a reference signal resource, a sending end spatial filter, a receiving end spatial filter, a spatial filter, a spatial receiving parameter, a sending end precoding, a receiving end precoding, an antenna port, an antenna weight vector, an antenna weight matrix, etc. A beam index may be replaced by a resource index (e.g., a reference signal resource index), because the beam may be bundled with some time-frequency code resources for transmission. A beam may also be a transmission (send/receive) mode; the transmission mode may include space division multiplexing, frequency domain/time domain diversity, beamforming, etc. In addition, the base station may perform quasi co-location (QCL) configuration for two reference signals, and inform a user end to describe a channel feature hypothesis. Parameters involved in the Quasi-co-location at least include: doppler spread, doppler shift, delay spread, average delay, average gain and spatial parameter (spatial Rx parameter, or spatial parameter). The spatial parameter may include spatial reception (Rx) parameters, angle information, spatial correlation of a receiving beam, an average delay, and correlation of time-frequency channel response (including phase information). The angle information may include at least one of: an angle of arrival (AOA), an angle of departure (AOD), a zenith angle of departure (ZOD), or a zenith angle of arrival (ZOA). The spatial domain filtering may be at least one of: a DFT vector, a precoding vector, a DFT matrix, a precoding matrix, or a vector formed by a linear combination of multiple DFTs, or a vector formed by a linear combination of multiple precoding vectors. In some embodiments, the concepts of vector and vector are interchangeable. In some embodiments, a beam pair is a combination of a sending beam and a receiving beam.

In some embodiments, Artificial Intelligence (AI) includes a device, a component, software, and a module with self-learning capabilities such as Machine Learning (ML), deep learning, reinforcement learning, transfer learning, deep reinforcement learning, meta-learning. In some embodiments, the artificial intelligence is implemented through an artificial intelligence network (or referred to as a neural network). A neural network includes multiple layers, and each layer includes at least one node. In an example, the neural network includes an input layer, an output layer, and at least one hidden layer. Each layer of the neural network uses a layer including, but not limited to at least one of a fully-connected layer, a dense layer, a convolutional layer, a transposed convolutional layer, a direct connection layer, an activation function, a normalization layer, a pooling layer, etc. In some embodiments, each layer of the neural network may include a sub-neural network, such as a residual network block (or also referred to as a Resnet block), a dense network, a recurrent neural network (RNN), etc. The artificial intelligence network may be implemented through a model, where the model may include a neural network model. The neural network model includes a neural network model structure and/or a neural network model parameter. The neural network model structure may be referred to as a model structure for short, and the neural network model parameter may be referred to as a network parameter or a model parameter for short. A model structure defines network architectures, such as a layer number of neural network, a size of each layer, the activation function, a connection situation, a size of a convolution kernel and a convolution stride, a convolution type (e.g., 1D convolution, 2D convolution, 3D convolution, hollow convolution, transposed convolution, separable convolution, grouped convolution, extended convolution, etc.), while the network parameters are weights and/or biases and values of each layer in the neural network model. A model structure may correspond to multiple sets of values of different neural network model parameters to adapt to different scenarios. The neural network model parameter is obtained through online training or offline training. For example, by inputting at least one sample and label, the neural network model is trained to obtain the neural network model parameters.

In some examples, a sample includes P features and Q labels. P is a positive integer, and Q is an integer greater than or equal to 0. A plurality of samples constitute a data set. In some embodiments, a sample includes a feature and a label, such as a sample in supervised learning. In an example, a sample has only one feature and no label, for example, a sample for unsupervised learning. In some examples, a sample has multiple features and a label, for example, a sample of a multi-input single-output supervised learning network model. In some examples, a sample includes one feature and multiple labels, for example, a sample in a single-input multiple-output supervised learning network model. In some examples, a sample includes multiple features and multiple labels, for example, a sample in a multi-input multi-output supervised learning network model. In some examples, a feature may be an array. In some examples, a label may also be an array. In the embodiments of the present disclosure, the array may be a vector or a matrix, or a tensor with dimensions larger than two dimensions. The dimension of the array corresponding to the sample is also called the dimension of the sample array. In the embodiments of the present disclosure, each element in the array may be a discrete value, or may also be a real value, or a real value from 0 to 1, or a real value from (-0.5) to 0.5, or the like. The array corresponding to the sample may include two arrangement types, a row-first arrangement type and a column-first arrangement type. In a row-first arrangement type, elements in the array are arranged in a first row, then a second row, and so on. In a column-first arrangement type, the elements in the array are arranged in a first column, then a second column, and so on. It should be noted that, in some examples, the elements in the array corresponding to the sample may be quantized, and different numbers of quantization bits may obtain samples with different quantization precisions, which is called a sample quantization accuracy. In some other examples, the sample is a parameter set including at least one parameter, a feature of the sample is also referred to as a first parameter subset, and a label is a second parameter subset. That is, a sample includes at least one first parameter subset and/or at least one second parameter subset.

In some embodiments, it is necessary to perform normalization on the elements in the array corresponding to a label or feature, to facilitate faster convergence of the network model. Normalization refers to normalizing values of elements in an array to a value within a range greater than or equal to a and smaller than or equal to b. There are multiple types of normalization for samples, for example, in an example, a=(-0.5), b=0.5. In another example, a=0, b=1. In yet another example, normalization is implemented by dividing the elements in the array by a value with a highest absolute value among values of the elements in the array. In yet another example, normalization is implemented by dividing the elements in the array by a variance of the elements in the array. In yet another example, normalization is implemented by dividing the elements in the array by a fixed value (e.g., a maximum value among the values of all elements in the array). In yet another example, normalization is implemented by dividing the elements in the array by a statistical value (e.g., a statistical variance of all elements in all samples). For values of indexes (such as a beam index, CRI, SSBRI, etc.), normalization may be implemented through One-Hot Encoding.

In some embodiments, a model refers to a data flow between an original input of a sample and an output target passing through multiple linear or nonlinear components. The said model includes a neural network model, a non-artificial intelligence module for processing information or corresponding model thereof, and a functional component or function for mapping input information to output information (the mapping includes linear mapping and nonlinear mapping).

In some embodiments, each model corresponds to a model indicator (Model ID) or a model identity (Model ID). In some embodiments, the model identifier may also have one of the following other equivalent names or concepts: a model index, a first identifier, a functionality identifier, a model indicator, etc.

In some examples, the model includes a model structure and model parameters. For example, the model is a neural network model, and the neural network model includes a neural network model structure and neural network model parameters, which are respectively used to describe the structure of the neural network and the parameter values of the neural network. A neural network model structure may correspond to multiple neural network model parameters, that is, neural network model structures may be the same, but corresponding neural network model parameter values may be different.

In some examples, a communication node sends a functionality or a functionality index to another communication node, to inform a terminal that the functionality is able to be used to process information. The functionality may also be referred to as a functional module, a functional function, a functional mapping, etc., which is used to describe a feature or type of an information processing mode. There are many types of information processing modes, such as positioning, beam management, CSI prediction, beam prediction, channel estimation, etc., and a feature of the information processing mode includes, but is not limited to, a scenario description to which the functionality is adapted, an input parameter description, an output parameter description, and which type of a measurement parameter what an output result is. A functionality corresponds to one or more information processing modes, and each information processing mode may be implemented using one or more models. Alternatively, a functionality may be implemented using one or more models.

In some examples, in order to better transmit data or signals, the base station or the terminal needs to acquire measurement parameters. The measurement parameters may include channel state information or other parameters for characterizing the channel. The channel state information may include at least one of the following: channel state information-reference signal resource indicator (CSI-RS resource indicator, CRI), synchronization signal block resource indicator (SSBRI), layer 1 reference signal received power (L1 reference signal received power, L1-RSRP or RSRP), differential RSRP; layer 1 reference signal signal-to-interference plus noise ratio (e.g., L1 signal-to-interference plus noise ratio, L1-SINR or SINR), differential L1-SINR; reference signal received quality (RSRQ), channel quality indicator (CQI), precoding matrix indicator (PMI), layer indicator (LI), rank indicator (RI), and precoding information. The precoding information includes first-type precoding information (e.g., codebook-based precoding information). A precoding matrix indicator is one type of the codebook-based precoding information. The precoding information further includes a mode based on non-codebook implementation (e.g., a second-type precoding information, such as precoding information obtained based on advanced technologies such as AI).

In some embodiments, the terminal and the base station transmit channel state information matching channel information through the first-type precoding information, and the first-type precoding information is precoding information based on a traditional channel feature matrix or a quantized value of the feature matrix, for example, may be precoding information implemented based on a method of a codebook. As an example, the codebook, for example, may include a N-antenna codebook in LTE (where N=2, 4, 8, 12, 16, 24, 32), the type I codebook, type II codebook, type II port selection codebook, enhanced type II codebook, enhanced type II selection codebook, and further enhanced type II selection codebook in NR. The codebook includes L code words. The main idea of the codebook is that the base station and the terminal save the L codewords in advance according to a mode of a prescribed formula or table or dictionary. In some examples, a codeword is a vector. In some other examples, the codeword is a matrix, the matrix includes r columns, each column is also a vector. In some embodiments, columns of the matrix are mutually orthogonal with each other. In some examples, a vector constituting the codeword is a 0-1 vector, where only one value of the entire vector is 1 and the other values are zero. In some examples, the vector constituting the codeword is a DFT (Discrete Fourier Transform) vector. In some examples, the vector constituting the codeword is obtained by performing a Kronecker product on two or more DFT vectors. In some examples, the vector constituting the codeword is obtained by connecting two or more DFT vectors that are multiplies with different phases for rotation. In some examples, the vector constituting the codeword is obtained by performing a Kronecker product on two or more DFT vectors that multiplies with phases for rotation. The base station or the terminal finds the codeword that matches channel information of the terminal best as an optimal codeword to transmit data or signals by searching from L codewords. In the embodiments of the present disclosure, the codeword matching the channel information includes, but is not limited to at least one of: a codeword with the shortest distance from the channel information, a codeword with the largest correlation between the channel information, a codeword with the shortest distance between an optimal right singular vector or matrix of the codeword and an optimal right singular vector or matrix of the channel information, a codeword with the largest correlation between an optimal right singular vector or matrix of the codeword and an optimal right singular vector or matrix of the channel information, a codeword with the largest signal-to-noise ratio calculated with the channel information, etc. L is an integer greater than 1, and is generally greater than a number of sending antennas.

In some examples, the terminal and the base station transmit channel state information matching the channel information through the second-type precoding information, and the second-type precoding information is channel state information obtained based on AI. In an example, the base station and the terminal obtain the channel state information through an encoder of an autoencoder, and the autoencoder includes an encoder and a decoder, the encoder is in the terminal and the decoder is in the base station. The terminal obtains compressed H1 by compressing obtained channel information H through the encoder, quantizes the compressed H1 to feed back the quantized H1 to the base station; the base station receives the quantized H1 for dequantization, and inputs the dequantized H1 into the decoder, and uses the decoder to decompress the dequantized H1, thereby restoring H. In an example, H includes K0 elements, the terminal selects K elements from H as H1, quantizes H1 and feeds back the quantized H1. The base station receives the K quantized elements and dequantizes them, inputs the dequantized K elements into a network model, and the network model outputs KO elements as the recovery of H, thereby obtaining a precoding matrix of H. K and K0 are integers greater than 1, and K<K0. In the embodiments of the present disclosure, the K elements selected from H or H1 passed through a compressor are all second-type precoding information. And for the sake of simplicity, the quantized H1 is also referred to as the second-type precoding information. In an example, the second-type precoding information is a precoding matrix different from the first-type precoding information and generated by other non-AI modes. In an example, the second-type precoding information is a precoding matrix other than the first-type precoding information.

In some examples, the channel information is information (such as a time domain channel matrix, a frequency domain channel matrix) obtained according to a reference signal (e.g., CSI-RS) for describing a channel environment between communication nodes. In some examples, the channel information is a complex matrix, and a size of a channel matrix is related to a number of sending antennas Nt, a number of receiving antennas Nr, and resource elements (REs). For example, there is at least one Nr×Nt channel matrix on a physical resource block.

In some embodiments, beam parameter information is a layer 1 reference signal received power (L1 Reference Signal Received Power, L1-RSRP or RSRP), or a differential RSRP corresponding to at least one beam. In some embodiments, the beam parameter information is a layer 1 signal-to-interference plus noise ratio (e.g., L1 Signal-to-Interference Plus Noise Ratio, L1-SINR or SINR), or a differential SINR corresponding to at least one beam. In some embodiments, the beam parameter information is a reference signal received quality (RSRQ) corresponding to at least one beam. In some embodiments, the beam parameter information is a beam angle (at least one of AOA, ZOA, AOD, ZOD, etc., also referred to as an azimuth angle of arrival, a vertical angle of arrival, an azimuth angle of departure, vertical angle of departure, respectively) corresponding to at least one beam. In some embodiments, the beam parameter information is a sending beam index corresponding to at least one beam. In some embodiments, the beam parameter information is a receiving beam index corresponding to at least one beam. In some embodiments, the beam parameter information is a pair index of a sending beam and a receiving beam (referred to as a beam pair index or beam pair for short) corresponding to at least one beam. In some embodiments, the beam parameter information is a beam domain receive power map (BDRPM) corresponding to at least one beam. In some embodiments, the beam parameter information is a channel state information reference signal resource indicator (CSI-RS Resource Indicator, CRI) corresponding to at least one beam. In some embodiments, the beam parameter information is a synchronization signal block resource indicator (SSBRI) or other reference signal resource indicator (e.g., a sounding reference signal resource indicator (SRS Resource Indicator, SRSRI)) corresponding to at least one beam. In some embodiments, the beam parameter information is a combination of at least two of the following beam parameter information corresponding to at least one beam: RSRP, RSRQ, SINR, beam angle, sending beam index, receiving beam index, beam pair index, CRI, SSBRI, etc. In some embodiments, the beam parameter information is a linear value of one of RSRP, RSRQ, and SINR. In some embodiments, the beam parameter information is a logarithmic value or a decibel value (dB) of one of RSRP, RSRQ, and SINR.

In some instances, location parameter information includes, but is not limited to, at least one of: transmission time related information, angle related information, received reference signal quality related information, multipath related information, and coordinates (including absolute coordinates and relative coordinates) of the first node.

In some embodiments, the transmission time related information includes at least one of: time of arrival (TOA), reference signal time difference (RSTD), relative time of arrival (RTOA), receive-transmit time difference (Rx-Tx time difference), and transmit-transmit time difference (Tx-Rx time difference).

In some examples, the angle related information includes at least one of: angle of arrival (AOA), angle of departure (AOD), zenith angle of arrival (ZOA) and azimuth angle of departure (AOD), and the departure angle includes the zenith angle of departure (ZOD) and an azimuth angle of departure (AOA).

In some examples, the received reference signal quality related information includes at least one of: Reference Signal Received Power (RSRP or L1-RSRP), SINR (or L1-SINR), CQI, SNR, RSRQ.

In some embodiments, the multipath information includes, but is not limited to at least one of: increasing a number of paths, increasing a relative delay of the paths, increasing a power of multipath, increasing time domain response of the multipath, increasing a real part and an imaginary part of the time domain response of the multipath, a path with a strongest power, a first path, N paths with a strongest power, a moment and/or RSRP corresponding to the N paths with the strongest power, the N paths within a time window, a moment and/or RSRP corresponding to the N paths within the time window, the N paths greater than a threshold, a moment and/or RSRP corresponding to the N paths greater than a threshold, and a line-of-sight or non-line-of-sight indicator (LoS/NLoS indicator).

In some examples, the beam parameter information is a subset of the channel state information, that is, the beam parameter information is the channel state information. The channel state information is a measurement parameter. In some examples, the measurement parameters, the channel state information, and the beam parameter information are all measurement results, or are all processing results, or are all generation results.

In some examples, in order to transmit the channel state information at a physical layer, the terminal and base station define a report (e.g., a CSI report or a CSI report config), where the CSI report defines at least one of the following parameters: a time-frequency resource for feeding back CSI, a report quality included in CSI (report Quantity), a time domain category fed back by CSI (report ConfiguraType), a channel measurement resource, an interference measurement resource, a measured bandwidth size, or other information. The CSI report may be transmitted on an uplink transmission resource, where the uplink transmission resource includes a PUSCH and a PUCCH, and the CSI report also includes time domain features, including periodic CSI report (P-CSI), aperiodic CSI report (AP-CSI), and semi-persistent CSI report (SP-CSI). Generally speaking, a number of bits transmitted via P-CSI is relatively small, thus the P-CSI is transmitted on the PUCCH; a number of bits transmitted by AP-CSI is relatively larger, and the AP-CSI is generally transmitted on the PUSCH, while the SP-CSI may be transmitted on the PUSCH, or may also be transmitted on the PUCCH. The P-CSI transmitted on PUCCH is generally configured by a higher layer signaling (e.g., a Radio Resource Control (RRC)), and SP-CSI transmitted on PUCCH is also configured, activated or deactivated by a higher layer signaling (e.g., an RRC and/or an MAC CE), while SP-CSI transmitted on PUSCH is activated or deactivated by a physical layer signaling (e.g., downlink control information (DCI)). The AP-CSI is triggered by DCI. While the DCI is generally transmitted on a physical downlink control channel (PDCCH).

In some embodiments, the base station configures, through a higher layer signaling and/or a physical layer signaling for the terminal, NC CSI reports that need to be fed back to the base station. Each report has an identity (ID), which is referred to as a CSI reportlD. The terminal may select MC CSI reports from the NC CSI reports according to its own computing power or processing power and the requirements of the base station. And according to an uplink feedback resource, at least one CSI report among the MC CSI reports is fed back, where NC and MC are positive integers, and MC<=NC. In an example, MC CSI reports need to be fed back, but feedback resources of at least two reports of the MC reports are conflicted with each other. A conflict between the feedback resources of the two reports refers to that at least one symbol and/or at least one subcarrier in transmission resources (e.g., PUCCH or PUSCH) used for feeding back and corresponding to the two reports are the same. In the embodiments of the present disclosure, feeding back CSI may also be referred to as transmitting CSI or sending CSI, e.g., carrying the channel state information on an uplink transmission resource for feeding back or transmission. The uplink transmission resource and the corresponding CSI are both indicated by a channel state information report. In the embodiments of the present disclosure, feeding back or transmitting a CSI report refers to feeding back the channel state information configured by the CSI report. In an example, feeding back or transmitting a CSI report refers to transmitting contents that needs to be transmitted and configured by the CSI reported transmitted by the transmission resource.

In some examples, an uplink transmission resource is allocated (or scheduled) for the first node through a higher layer signaling and/or a physical-layer signaling, where the uplink transmission resource is used to transmit uplink data (e.g., channel state information or a data set). There are two modes to allocate (or schedule) uplink transmission resources for the first node through a higher layer signaling and/or physical layer signaling, i.e., a dynamic grant (DG) mode (also referred to as dynamically allocating resources), and a configured grant (CG) mode. The configured grant include two types, e.g., Configured Grant Type1 (or referred to as first-type configured grant) indicated by a higher layer signaling; and Configured Grant Type2 (or referred to as second-type configured grant) indicated by a higher layer and physical layer signaling. While the dynamic grant mode is indicated by a physical layer signaling. In some examples, the terminal transmits data through a parameter determined according to the Configured Grant Type1. The base station transmits parameters (such as a time-frequency resource location of the Configured Grant Type1, a period of CG resources, a number of hybrid automatic repeat request (HARQ) processes using CG resources, and the modulation and coding scheme (MCS)) to the terminal through an RRC signaling, and the terminal stores the parameters as a configured uplink grant. After the RRC signaling configures the Configured Grant Type1, the terminal may use a transmission resource corresponding to the configured grant for uplink data transmission. In some examples, the terminal transmits data through a parameter determined according to the Configured Grant Type2. The base station transmits parameters (such as a period of CG resources of Configured Grant Type2, a number of HARQ processes using CG resources, and which MCS table to use) to the terminal through an RRC signaling. However, the time-frequency resource location, MCS, etc., are transmitted to the terminal by the base station through DCI, and stored by the terminal as configured uplink grant. The base station activates or deactivates the terminal's operation for transmitting uplink data through a physical layer signaling.

In some examples, information (e.g., the channel state information or a data set) is transmitted via higher layers. There are two modes for scheduling transmission resources of uplink data transmitted via the higher layers, such as the dynamic grant (DG) mode and the configured grant (CG) mode. The configured grant includes two types, e.g., Configured Grant Type1 and Configured Grant Type2. In some examples, the terminal transmits data through a parameter determined according to the Configured Grant Type1. The base station transmits parameters (such as a time-frequency resource location of the Configured Grant Type1, a period of CG resources, a number of hybrid automatic repeat request (HARQ) processes using CG resources, and MCS) to the terminal through an RRC signaling, and the terminal stores the parameters as a configured uplink grant. After the RRC signaling configures the Configured Grant Type1, the terminal may use a transmission resource corresponding to the configured grant for uplink data transmission. In some examples, the terminal transmits data through a parameter determined according to the Configured Grant Type2. The base station transmits parameters (such as a period of CG resources of Configured Grant Type2, a number of HARQ processes using CG resources, and which MCS table to use) to the terminal through an RRC signaling. However, the time-frequency resource location, MCS, etc., are transmitted to the terminal by a network device through DCI, and stored by the terminal as configured uplink grant. The base station activates or deactivates the terminal's operation for transmitting uplink data through a physical layer signaling.

In some embodiments, an antenna is a physical antenna. In some examples, the antenna is a logical antenna. In some examples, concepts of a port and an antenna may be interchangeable. In some examples, the antenna is a sending antenna. In some examples, the antenna is a receiving antenna. In some examples, the antenna includes an antenna pair of a sending antenna and a receiving antenna. In some examples, the antenna may be a uniform linear array. In some examples, the antenna is a uniform planar array (e.g., including Ng rows and Mg columns of array elements/antennas, where Ng and Mg are positive integers). In some examples, the antenna is a uniform circular array. In some examples, the antenna may be a non-uniform linear array. In some examples, the antenna is a non-uniform planar array. In some examples, the antenna is a non-uniform circular array. In some examples, the antenna is a directional antenna, and in some examples, the antenna is an omnidirectional antenna. In some examples, the antenna is a dual polarized antenna. In some examples, the antenna is a single polarized antenna.

As shown in FIG. 2, a data set sending method is provided in the embodiments of the present disclosure, and the method includes the following S101 to S103.

In S101, N samples and K parameter threshold groups are acquired.

N and K are both positive integers.

In some embodiments, a sample may include at least one feature and/or at least one label. In some examples, a feature may be a set (which may be referred to as a first parameter set (e.g., SetB, which corresponds to an input portion of a model)) of multiple parameters. In some examples, the sample further includes the at least one label, and a label may also be a set (which may be referred to as a second parameter set (e.g., SetA, which corresponds to a label portion of the sample, i.e., an ideal value of an output of the model)) of parameters.

In some embodiments, each sample also corresponds to a sample parameter, which may be referred to as a third parameter set. The third parameter set may include one or more parameters of the first parameter set, and may also include one or more parameters in the second parameter set, or may further include parameters (such as a signal to noise ratio, signal to interference plus noise ratio, confidence, inference time, measurement time, motion speed, a reference signal received power, etc., used to evaluate the sample quality) used to describe a sample quality, a feature, an application scenario, or a channel feature, etc. In some embodiments, the above-mentioned sample parameter may be a sample parameter corresponding to one sample, or may be a sample parameter corresponding to a group of samples. In an example, a parameter (such as RSRP, SINR, CQI, etc.) corresponding to the sample may refer to a link quality of a terminal at a corresponding moment when the sample is collected, which may be broadband, and one sample corresponds to only one RSRP, SINR, or CQI. A probability and a confidence may also be an evaluation indicator for a label of the sample. One sample corresponds to one confidence or probability.

In some embodiments, a parameter set (i.e., features and/or labels) of the sample includes channel matrix information, or a sample parameter of the sample includes one of the channel state information, or the sample parameter of the sample includes one of beam measurement parameters.

In some embodiments, the label of the sample may include location coordinates or other location parameter information in positioning, such as at least one of TOA, RSTD, LoS/NLoS indicator or angle information. In some embodiments, the label of the sample may further include the beam measurement parameters (e.g., at least one of L1-SINR, L1-RSRP, CRI, SSBRI, etc.) in beam management. In some embodiments, the label of the sample may further be channel state information, such as channel information or a feature vector. In some embodiments, the label of the sample may further be a channel matrix on a subcarrier in channel estimation.

That is, the sample parameter (i.e., the third parameter set) of the sample may include at least one of: a motion speed, an RSRP, an SINR, an MCS, a CQI, a confidence, a prediction probability, a cosine similarity, measurement time, inference time, location parameter information, beam parameter information, a throughput, a bit error rate or a block error rate.

Correspondingly, the above-mentioned K parameter threshold groups include at least one of: a motion speed threshold group, an RSRP threshold group, an SINR threshold group, an MCS threshold group, a CQI threshold group, a confidence threshold group, a prediction probability threshold group, a cosine similarity threshold group, a measurement time threshold group, an inference time threshold group, a location parameter information threshold group, a beam parameter information threshold group, a throughput threshold group, a bit error rate threshold group, or a block error rate threshold group. A threshold group includes one or more threshold values.

In some embodiments, the second node may send a reference signal resource in at least one reference signal resource or a reference signal resource set to the first node. The first node receives the reference signal resource, and obtains the above-mentioned N samples according to a received reference signal by measuring the reference signal resource.

Exemplarily, taking the second node being a base station and the first node being a terminal as an example, the base station sends a reference signal to the terminal; the terminal obtains channel matrix information H of a plurality of physical resource blocks by measuring the reference signal, and then acquires the above-mentioned plurality of samples. Exemplarily, the terminal may obtain a feature vector V or a quantized value of the feature vector V of respective sub-bands according to the channel matrix information. V is a complex matrix of Nt×Ns, Nt is a number of sending antennas, and Ns is a rank of the channel matrix. It should be noted that, in order to efficiently feed back V or H of the above-mentioned multiple sub-bands, it is necessary to compress the V or H through an encoder, so as to feed back channel state information compressed by the encoder to the base station. Further, the base station receives the channel state information, and decompresses the channel state information through a decoder on the base station side, so as to obtain decoded V or H. In order to achieve good performance of the encoder and decoder, samples are needed to train or fine tune the encoder and decoder. Furthermore, the samples used for training or fine-tuning a model need to have high-quality labels and/or features to improve training accuracy. The higher the similarity between a quality of a label of a sample and V or H obtained under ideal conditions, the better. For high-precision or high-quality labels, a number of quantized bits is relatively large, which requires a large feedback overhead. As an example, a quality of a label may be affected by a location of the first node in a cell. For example, in a case where the first node is at a center of a cell, a channel quality is good, and a corresponding label quality is also good; in a case where the first node is at an edge of the cell, the channel quality is poor, and since obtained channel information is interfered, the corresponding label quality is also poor. In addition, a quality of a feature of the sample may be affected by interference or noise, a quantification accuracy of a collection device, a measurement accuracy of the collection device, etc.

In some embodiments, the first node may use time domain channel information or frequency domain channel information obtained through a received reference signal as a feature, and use location information of the terminal as a label, thus a sample is formed. The base station or the terminal constructs a data set by collecting samples of one or more users at different moments and/or different positions.

In some embodiments, various parameter threshold groups correspond to a sample parameter. For example, for a sample parameter--a motion speed, a threshold group for the motion speed may be obtained. Furthermore, a parameter threshold group may include one or more parameter thresholds.

In some embodiments, the above-mentioned K parameter threshold groups may be sent from the second node to the first node. Exemplarily, the K parameter threshold groups are determined according to at least one of: a received higher layer signaling and/or physical layer signaling; a capability of the first node; a model or a model identifier of the first node; a model functionality or a functionality identifier; a functionality scenario or a scenario identifier.

Exemplarily, the first node may obtain the above-mentioned K threshold groups through a negotiation mode with the second node. Alternatively, the first node obtains the above-mentioned K threshold groups through, for example, engineering experience, or simulation testing, or actual measurement. Alternatively, K thresholds correspond to a model, and different models correspond to different K threshold groups. For example, values of K threshold groups corresponding to model 1 are different from values of K threshold groups corresponding to model 2. Alternatively, the K threshold groups correspond to an information processing mode, and different information processing modes correspond to different K threshold groups. For example, values of K threshold groups corresponding to information processing mode 1 are different from values of K threshold groups corresponding to information processing mode 2. Alternatively, the above-mentioned K threshold groups correspond to a functionality, different functions correspond to different K threshold groups, for example, values of K threshold groups corresponding to functionality 1 are different from values of K threshold groups corresponding to functionality 2. Alternatively, the K threshold groups correspond to terminal capability, and different terminal capabilities correspond to different K threshold groups. For example, values of K threshold groups corresponding to terminal capability 1 are different from values of K threshold groups corresponding to terminal capability 2.

In the embodiments of the present disclosure, one or more models may be configured to implement a functionality or an information processing mode of a communication node. Exemplarily, a communication node sends a functionality or a communication node sends a functionality index to another communication node, thus the another communication node may be informed to use the functionality to process information. The functionality may also be referred to as a functional module, a functional function, a functional mapping, etc., which is used to describe a feature or type of an information processing mode. There are many types of information processing modes, such as positioning, beam management, CSI prediction, beam prediction, channel estimation, etc. A feature of the information processing mode includes scenario description information to which the functionality is adapted, input parameter description information, output parameter description information, and a type of a measurement parameter to which an output result belongs. A functionality corresponds to one or more information processing modes, and various information processing modes may be implemented using one or more models. Alternatively, a functionality may be implemented using one or more models.

Please continue to refer to FIG. 2, in S102, a data set is determined from the N samples according to the K parameter threshold groups, where the data set includes M samples.

M is a positive integer, and N is greater than or equal to M. The data set in the embodiments of the present disclosure is also referred to as a datum set, a data aggregation or a datum aggregation, which is a kind of set consisting of one or more samples.

In some embodiments, the first node determines whether at least one sample is included/classified/added in the data set according to the K parameter threshold groups and K sample parameters corresponding to the at least one sample among the N samples. Exemplarily, the first node may determine whether the each sample is included in the data set according to a size relationship between the K parameter threshold groups and the K sample parameters corresponding to the each sample in the N samples. Alternatively, for at least one sample among the N samples, the first node may also determine whether the at least one sample is included in the data set according to at least one parameter threshold group among the K parameter threshold groups and at least one sample parameter of the K sample parameters corresponding to the at least one sample.

In some embodiments, the first node may determine whether a sample parameter of a sample meets a preset requirement based on the K parameter threshold groups and K sample parameters of the sample, and further determine that the sample is included in the data set in a case where the sample parameter meets the preset requirement. In the embodiments of the present disclosure, in response to that a setting of the preset requirement is related to a sample quality, the preset requirement may be used to indicate a preset quality requirement of the sample. If the sample parameter of the sample meets the preset requirement, the sample quality of the sample meets the preset quality requirement, and the sample is a valid sample. Conversely, if the sample parameter of the sample does not meet the preset requirement, it means that the sample quality of the sample does not meet the preset quality requirement, and the sample is an invalid sample. Thus, it is determined that a sample that meets the preset quality requirement is included in the data set.

In some embodiments, a parameter threshold group may include a first threshold value, that is, one threshold group includes only one threshold value, which is referred to as a first threshold value. The first node may determine whether the at least one sample is included in the data set according to a size relationship between the first threshold value and a value of a sample parameter corresponding to the first threshold value.

Exemplarily, the first threshold value may be a preset first motion speed V0, RSRPO, SINRO, MCS0, CQI0, a first confidence threshold value Z0, a first prediction probability threshold value P0, a first inference time threshold value T0 or a first measurement time threshold value MT0, a throughput TH0, a bit error rate BERO, or a block error rate BLERO. Exemplarily, the above-mentioned MCS0 may be an i-th order (or an i-th row) in a specified MCS table. Similarly, the above-mentioned RSRPO, SINRO, and CQI0 may also be a RSRP or SINR or CQI corresponding to the i-th order in the specified MCS table.

In an implementation, the first node determines whether a sample quality of a sample meets a preset quality requirement according to a size relationship between the first threshold value and a value of the sample parameter corresponding to the first threshold value. Accordingly, it is determined that a sample that meets the preset quality requirement is included in the above-mentioned data set.

In some embodiments, a sample parameter includes a first-type sample parameter and a second sample parameter. The first-type sample parameter includes, but is not limited to, at least one of: a reference signal received power (RSRP), a signal to interference plus noise ratio (SINR), a modulation and coding scheme (MCS), a channel quality indicator (CQI), a confidence, a prediction probability, a cosine similarity, location parameter information, beam parameter information, or a throughput. If the sample parameter is smaller than or equal to the first threshold value, it is determined that the sample does not meet the preset quality requirement, or if the sample parameter is greater than the first threshold value, it is determined that the sample meets the preset quality requirement. In some other embodiments, the second-type sample parameter includes, but is not limited to, at least one of: a motion speed, measurement time, inference time, a bit error rate, or a block error rate. If the sample parameter is greater than or equal to the first threshold value, it is determined that the sample does not meet the preset quality requirement, or if the sample parameter is smaller than the first threshold value, it is determined that the sample meets the preset quality requirement.

As an example, the sample parameter is L1-RSRP, and the first threshold value is RSRP0. If L1-RSRP is smaller than or equal to RSRPO, it may be determined that the sample does not meet the preset quality requirement. Otherwise, if L1-RSRP is greater than RSRPO, it may be determined that the sample meets the preset quality requirement. As another an example, the sample parameter is L1-SINR, and the first threshold value is SINR0. If L1-SINR is smaller than or equal to SINRO, it may be determined that the sample does not meet the preset quality requirement. Otherwise, if L1-SINR is greater than SINRO, it may be determined that the sample meets the preset quality requirement. As another example, the sample parameter is CQI, and the first threshold value is CQI0. If the CQI is smaller than or equal to CQI0, it may be determined that the sample does not meet the preset quality requirement. Otherwise, if the CQI is greater than CQI0, it may be determined that the sample meets the preset quality requirement. As another example, the sample parameter is MCS, and the first threshold value is MCS0. If MCS is smaller than or equal to MCS0, it may be determined that the sample does not meet the preset quality requirement. Otherwise, if MCS is greater than MCS0, it may be determined that the sample meets the preset quality requirement. As another example, the sample parameter is a motion speed V, and the first threshold value is V0. If the motion speed V is greater than or equal to V0, it may be determined that the sample does not meet the preset quality requirement. Otherwise, if the motion speed V is smaller than V0, it may be determined that the sample meets the preset quality requirement. As another example, the sample parameter is a confidence Z, and the first threshold value is Z0. If the confidence Z is smaller than or equal to Z0, it may be determined that the sample does not meet the preset quality requirement. Otherwise, if the confidence Z is greater than Z0, it may be determined that the sample meets the preset quality requirement. As another example, the sample parameter is a prediction probability P, and the first threshold value is P0. If P is smaller than or equal to P0, it may be determined that the sample does not meet the preset quality requirement. Otherwise, if P is greater than P0, it may be determined that the sample meets the preset quality requirement. As another example, the sample parameter is measurement time MT, and the first threshold value is MT0. If MT is smaller than or equal to MT0, it may be determined that the sample does not meet the preset quality requirement. Otherwise, if MT is greater than MT0, it may be determined that the sample meets the preset quality requirement.

As another example, the sample parameter is inference time T, and the first threshold value is T0. If T is smaller than T0, it may be determined that the sample meets the preset quality requirement. Otherwise, if T is greater than T0, it may be determined that the sample does not meet the preset quality requirement. As another example, the sample parameter is a throughput TH, and the first threshold value is TH0. If TH is smaller than or equal to TH0, it may be determined that the sample does not meet the preset quality requirement. Otherwise, if TH is greater than TH0, it may be determined that the sample meets the preset quality requirement. As another example, the sample parameter is a bit error rate BER, and the first threshold value is BER0. If the BER is greater than or equal to BERO, it may be determined that the sample does not meet the preset quality requirement. Otherwise, if the BER is smaller than BERO, it may be determined that the sample meets the preset quality requirement. As another example, the sample parameter is a block error rate BLER, and the first threshold value is BLERO. If the BLER is greater than or equal to BLER0, it may be determined that the sample does not meet the preset quality requirement. Otherwise, if BLER is smaller than BERO, it may be determined that the sample meets the preset quality requirement. In these embodiments or examples, the sample not meeting the quality requirement may also be referred to as a sample not meeting the requirement. Or the sample is referred to as a sample that does not meet the requirement. A sample that does not meet the requirement refers to a sample that is not suitable for training a model or for model monitoring, or is not suitable for model inference. Therefore, the terminal may not feed back the sample. That is, the sample that does not meet the requirement cannot be included in the data set.

In some examples, it is necessary to determine whether a sample meets a requirement (e.g., a quality requirement) based on the K sample parameters and K sample parameter thresholds at the same time. Each first-type sample parameter needs to be greater than or equal to a corresponding threshold value of the first-type sample parameter, or each second-type sample parameter needs to be smaller than or equal to a corresponding threshold value, and only then the sample is considered to meet the requirement. For example, in an example, at least two of the following requirements need to be met at the same time before the sample is considered to meet the requirement: the L1-RSRP corresponding to the sample is greater than or equal to RSRPO, or the L1-SINR corresponding to the sample is greater than or equal to SINRO, or the CQI corresponding to the sample is greater than or equal to the threshold CQI0, or the MCS corresponding to the sample is greater than or equal to the threshold MCS0, or the probability P corresponding to the sample is greater than or equal to the threshold P0, or the confidence Z corresponding to the sample is greater than or equal to the threshold Z0, or the throughput TH corresponding to the sample is greater than or equal to the threshold TH0, or the inference time T corresponding to the sample is smaller than or equal to T0, or the motion speed V corresponding to the sample is smaller than or equal to the threshold V0, or the measurement time MT corresponding to the sample is smaller than or equal to the threshold MT0, or the bit error rate BER corresponding to the sample is smaller than or equal to the threshold BERO, or the block error rate BLER corresponding to the sample is smaller than or equal to BLERO.

In another implementation, a sample parameter may include a plurality of values, and the first node may determine whether the sample quality of the sample meets the preset quality requirement based on a size relationship between the first threshold value and the plurality of values of the sample parameter.

That is, the first node may determine size relationships between various values of the sample parameter and the first threshold value, and then determine the sample quality of the sample. And the first node may also determine that the sample meeting the preset quality requirement is included in the above-mentioned data set.

In some embodiments, each value of the plurality of values of the sample parameter corresponds to a period of measurement time. Alternatively, each value of the plurality of values of the sample parameter corresponds to a beam. Exemplarily, for a sample parameter, the first node may obtain C values of the sample parameter through C measurements at different time instances. Alternatively, a sample includes C2 values of a sample parameter corresponding to C2 beams (e.g., a sending beam, a receiving beam, a sending-receiving beam pair). C and C2 are positive integers greater than 1.

As an example, taking the C values of the sample parameter measured in C measurements at different time instances as an example, if C1 values of the C values are smaller than the first parameter threshold, it may be determined that the sample quality of the sample does not meet the preset quality requirement. Otherwise, it is determined that the sample quality of the sample meets the preset quality requirement. C1 and C are positive integers, and C1 is smaller than or equal to C. In some embodiments, C1 is greater than or equal to a first preset number of values.

As another example, taking the C2 values of the sample parameters corresponding to the C2 beams as an example, if C3 values of the C2 values are smaller than the first parameter threshold, it is determined that the sample quality of the sample does not meet the preset quality requirement. Otherwise, it is determined that the sample quality of the sample meets the preset quality requirement. C2 and C3 are positive integers, and C3 is smaller than or equal to C2. In some embodiments, C1 is greater than or equal to a first preset number of values.

As yet another example, taking the C2 values of the sample parameters corresponding to the above-mentioned C2 beams as an example, among largest C3 values of the C2 values, if C4 values are smaller than the first parameter threshold, it is considered that the sample quality of the sample does not meet the preset quality requirement, otherwise it is considered that the sample quality of the sample meets the preset quality requirement. C2, C3 and C4 are positive integers, and C3 is smaller than or equal to C2, and C4 is smaller than or equal to C3.

It should be understood that in the above examples, the sample parameter may be a sample parameter such as RSRP, SINR, CQI, etc., and accordingly, the first parameter may be a parameter threshold value for the sample parameter such as RSRP, SINR, CQI, etc.

In some embodiments, the parameter threshold group may further include a plurality of threshold values. For example, if a parameter threshold value includes a second threshold value and a third threshold value, the first node may determine whether a sample is included in the data set according to a relationship between the second threshold value, the third threshold value and a value of a target sample parameter.

Exemplarily, the first node may determine whether the sample quality of the sample meets the preset quality requirement based on the relationship between the second threshold value, the third threshold value and the value of the target sample parameter, and further determine whether the sample meeting the preset quality requirement is included in the above-mentioned data set.

Exemplarily, whether a sample meets a preset requirement is for a sample parameter X (mainly referring to a first-type sample parameter, such as a reference signal received power (RSRP), a signal to interference plus noise ratio (SINR), a modulation and coding scheme (MCS), a channel quality indicator (CQI), a confidence, a prediction probability, a cosine similarity, location parameter information, beam parameter information, a throughput), a second threshold value Y1 and a third threshold value Y2 is included, and Y1 is smaller than Y2. As an example, if X is smaller than or equal to Y1, it may be determined that the sample does not meet the preset quality requirement. Otherwise, if X is greater than or equal to Y2, it may be determined that the sample meets the preset quality requirement. As another example, there is only one threshold Y0, and if X is smaller than or equal to Y0, it may be determined that the sample does not meet the preset quality requirement. Otherwise, if X is greater than or equal to YO, it may be determined that the sample meets the preset quality requirement.

As another example, if X (mainly referring to a second-type sample parameter, which includes, but not limited to at least one of: a motion speed, measurement time, inference time, a bit error rate or a block error rate) is greater than or equal to Y2, it may be determined that the sample does not meet the preset quality requirement; otherwise, if X is smaller than or equal to Y1, it may be determined that the sample meets the preset quality requirement. As another example, there is only one threshold Y0, and if X is smaller than or equal to Y0, it may be determined that the sample meets the preset quality requirement. Otherwise, if X is greater than or equal to Y0, it may be determined that the sample does not meet the preset quality requirement.

In the present disclosure, the preset quality requirement may also be referred to as a preset requirement for short. A sample that meets the preset requirement is a valid sample, and a sample that does not meet the preset requirement is an invalid sample. In addition, a sample that cannot be measured is also an invalid sample.

As an example, if a sample parameter L1-RSRP is smaller than or equal to a second threshold value RSRP2, it is determined that the sample does not meet the preset quality requirement. If L1-RSRP is greater than or equal to a third parameter threshold value RSRP3, it is determined that the sample meets the preset quality requirement. The RSRP2 is smaller than the RSRP3. As another example, if a sample parameter L1-SINR is smaller than or equal to a second threshold value SINR2, it is determined that the sample does not meet the preset quality requirement. If L1-SINR is greater than or equal to a third parameter threshold value SINR3, it is determined that the sample meets the preset quality requirement. The SINR2 is smaller than the SINR3. As yet another example, if a sample parameter CQI is smaller than or equal to a second threshold value CQI2, it is determined that the sample does not meet the preset quality requirement. If the CQI is greater than or equal to a third parameter threshold value CQI3, it is determined that the sample meets the preset quality requirement. The CQI2 is smaller than the CQI3. As yet another example, if a sample parameter MCS is smaller than or equal to a second threshold value MCS2, it is determined that the sample does not meet the preset quality requirement. If the MCS is greater than or equal to a third parameter threshold value MCS3, it is determined that the sample meets the preset quality requirement. The MCS2 is smaller than the MCS3. As yet another example, a sample parameter is a motion speed V, and if V is smaller than or equal to a second threshold value V2, it is determined that the sample meets the preset quality requirement. If V is greater than or equal to a third parameter threshold value V3, it is determined that the sample does not meet the preset quality requirement. The V2 is smaller than the V3. As yet another example, a sample parameter corresponding to the sample is a probability P, and if P is smaller than or equal to a second threshold value P2, it is determined that the sample does not meet the preset quality requirement. If P is greater than or equal to a third parameter threshold value P3, it is determined that the sample meets the preset quality requirement. The P2 is smaller than the P3. As yet another example, a sample parameter is a confidence Z, and if Z is smaller than or equal to a second threshold value Z2, it is determined that the sample does not meet the preset quality requirement. If Z is greater than or equal to a third parameter threshold value Z3, it is determined that the sample meets the preset quality requirement. The Z2 is smaller than the Z3.

As yet another example, a sample parameter is inference time T, and if T is greater than or equal to a second threshold value T3, it is determined that the sample does not meet the preset quality requirement. If T is smaller than or equal to a third parameter threshold value T2, it is determined that the sample meets the preset quality requirement. The T2 is smaller than the T3. As yet another example, a sample parameter corresponding to the sample is measurement time MT, and if MT is greater than or equal to a second threshold value MT3, it is determined that the sample does not meet the preset quality requirement. If MT is smaller than or equal to a third parameter threshold value MT2, it is determined that the sample meets the preset quality requirement. The MT2 is smaller than the MT3.

It should be noted that in some examples, the sample parameter X is between Y1 and Y2. At this time, whether the sample meets the requirements needs to be further determined based on a capability of the terminal, a capability or a complexity, or a functionality of a model.

In some examples, it is necessary to determine whether a sample meets a requirement (e.g., a quality requirement) based on the K sample parameters and K sample parameter threshold groups at the same time. Each first-type sample parameter needs to be greater than or equal to a corresponding threshold value Y2 of the first-type sample parameter, or each second-type sample parameters needs to be smaller than or equal to a corresponding threshold value Y1, and only then the sample is considered to meet the requirement. For example, in an example, at least two of the following requirements need to be met at the same before the sample is considered to meet the requirement: the L1-RSRP corresponding to the sample is greater than or equal to RSRP2, or the L1-SINR corresponding to the sample is greater than or equal to SINR2, or the CQI corresponding to the sample is greater than or equal to the threshold CQI2, or the MCS corresponding to the sample is greater than or equal to the threshold MCS2, or the probability P corresponding to the sample is greater than or equal to the threshold P2, or the confidence Z corresponding to the sample is greater than or equal to the threshold Z2, or the throughput TH corresponding to the sample is greater than or equal to the threshold TH2, or the inference time T corresponding to the sample is smaller than or equal to T1, or the motion speed V corresponding to the sample is smaller than or equal to the threshold V1, or the measurement time MT corresponding to the sample is smaller than or equal to the threshold MT1, or the bit error rate BER corresponding to the sample is smaller than or equal to the threshold BER1, or the block error rate BLER corresponding to the sample is smaller than or equal to BLER1.

In some embodiments, the first node may further determine whether a sample meets the preset quality requirement according to a size relationship between the second threshold value, the third threshold value and the plurality of values of the sample parameter, and further determine whether the sample meeting the preset quality requirement is included in the above-mentioned data set. In some embodiments, each value of the plurality of values of the sample parameter corresponds to a period of measurement time. Alternatively, each value of the plurality of values of the sample parameter corresponds to a beam.

Exemplarily, if a sample parameter has C values, and the evaluation results of C1 values among the C values indicate that the preset quality requirement is not met, it is determined that the sample does not meet the preset quality requirement. Otherwise, it is determined that the sample quality of the sample meets the preset quality requirement. C1 and C are positive integers, and C1 is smaller than or equal to C. In some embodiments, C1 is greater than or equal to a first preset number of values.

In some embodiments, a sample parameter may further include a plurality of sample parameters, and further the sample quality of the sample may be determined according to a size relationship between the plurality of sample parameters and the corresponding parameter threshold group.

In some embodiments, a parameter threshold group corresponding to a sample parameter may include one or more threshold values. Similarly, a sample parameter may also include one or more values, which will not be repeated herein.

Exemplarily, the sample parameter may include any A parameters of a motion speed, an RSRP, an SINR, an MCS, a CQI, a confidence, a prediction probability, a cosine similarity, measurement time, inference time, location parameter information, beam parameter information, a throughput, a bit error rate, or a block error rate, where A is a positive integer greater than or equal to 2.

In some embodiments, the first node may determine the above-mentioned data set based on M samples whose sample quality meets a preset quality requirement among the N samples.

In some embodiments, the N samples are divided into a plurality of sample groups, each sample group including a plurality of samples.

In some embodiments, the first node may perform at least one of the following operations to determine whether a sample of a sample group is included in the data set:
in response to that sample parameters of all samples in the sample group meet a preset requirement with the K sample threshold groups, it is determined that the sample group is included in the data set;
in response to that a sample parameter of at least one sample in the sample group does not meet a preset requirement with the K sample threshold groups, the sample group is not included in the data set;
in response to that sample parameters corresponding to C1 samples of the sample group corresponding to at least one sample among the N samples do not meet the preset requirement, it is determined that a sample of the sample group is not included in the data set, and C1 is a positive integer;
whether the sample group is included in the data set is determined based on whether any time-adjacent samples in the sample group meet a time constraint relationship. Exemplarily, if any time-adjacent samples in the sample group do not meet the time constraint relationship, it is determined that the sample group is not included in the data set; or any time-adjacent samples in the sample group meet the time constraint relationship, it is determined that the sample group is included in the data set;
whether the sample group is included in the data set is determined based on whether any adjacent samples in frequency domain in the sample group meet a frequency domain constraint relationship. Exemplarily, if any adjacent samples in frequency domain in the sample group do not meet the frequency domain constraint relationship, it is determined that the sample group is not included in the data set; or if any adjacent samples in frequency domain in the sample group meet the frequency domain constraint relationship, it is determined that the sample group is included in the data set; or
whether the sample group is included in the data set is determined based on whether any adjacent samples in spatial domain in the sample group meet a spatial domain constraint relationship. Exemplarily, if any adjacent samples in spatial domain in the sample group do not meet the spatial domain constraint relationship, it is determined that the sample group is not included in the data set; or if any adjacent samples in spatial domain in the sample group meet the spatial domain constraint relationship, it is determined that the sample group is included in the data set.

If any adjacent samples in spatial domain in the sample group do not meet the spatial domain constraint relationship, it is determined that the sample group is not included in the data set.

A time unit may be a slot, a sub-slot, a symbol group, a frame, etc.

If any adjacent samples in frequency domain unit in the sample group do not meet a frequency domain unit constraint relationship, the sample group is not included in the data set. A frequency domain unit includes one of a physical resource block, a subcarrier group, a sub-band, a bandwidth part (BWP), etc.

If any adjacent samples in spatial domain unit in the sample group do not meet a spatial domain unit constraint relationship, the sample group is not included in the data set. A spatial domain unit includes one of a beam, a basis vector index, an antenna, etc.

It should be noted that, if a sample parameter of a sample meet the preset requirement, then the sample quality of the sample meets the preset quality requirement. Conversely, if the sample parameter of the sample do not meet the preset requirement, it means that the sample quality of the sample does not meet the preset quality requirement. A sample included in the dataset needs to meet the preset quality requirement.

In some embodiments, the above-mentioned time unit constraint relationship includes at least one of the following:
a difference between time units corresponding to samples at two adjacent time units is smaller than a preset time unit threshold. The preset time unit threshold may be determined based on a slot, a sub-slot, or a symbol group;
a difference between frequency units corresponding to samples at two adjacent frequency domain units is smaller than a preset frequency domain unit threshold. The preset frequency domain unit threshold may be determined based on a sub-band, a physical resource block, a subcarrier group, or a center carrier frequency; or
a difference between spatial domain units corresponding to samples at two adjacent spatial domain units is smaller than a preset spatial domain threshold. The preset spatial unit threshold may be determined based on an antenna spacing, an antenna index, a beam index, an L departure angle or an L arrival angle.

In some embodiments, a number of samples in a sample group is determined according to a measurement window size and/or a prediction window size.

Exemplarily, a measurement time window or a prediction window may be preset. In a time domain prediction for CSI or beam, C samples form a sample group, and the C samples in the sample group are within a measurement time window. One sample corresponds to one slot, that is, if a sample quality of a sample corresponding to any slot does not meet the preset quality requirement, then the sample group does not belong to the data set. Alternatively, if sample qualities corresponding to C1 slots does not meet the preset quality requirement, the sample group does not belong to the data set. C and C1 are positive integers, and C1 is smaller than C.

In S103, the data set is sent.

In some embodiments, the first node encodes the N samples into a coding block and sends the coding block. A number of coding blocks obtained by encoding the N samples is not limited in the embodiments of the present disclosure. In some examples, a coding block is also referred to as a transport block (TB).

Exemplarily, the first node may send the coding block in a report, or the first node may further send a coding block of the above-mentioned M samples in an RRC message. A transmission resource corresponding to the RRC message may be configured through a dynamic grant mode or through a configured grant mode.

In some embodiments, the first node may further send a parameter related to a size of the data set, and the parameter related to the data set includes a number of samples included in the data set and/or a size of the coding block obtained by encoding the data set, such as a number of bits of the coding block.

In an example, taking the first node being a terminal and the second node being a base station as an example, if the terminal sends a value of M to the base station, the base station receives the value of M and allocates a transmission resource capable of transmitting the M samples to the terminal based on the value of M.

In another example, also taking the first node being a terminal and the second node being a base station as an example, if the terminal sends a size Ct of a coding block corresponding to the M samples to the base station, the base station receives the size Ct of the coding block corresponding to the M samples. After the base station receives a value of Ct, the base station may determine that the terminal needs a transmission resource with a capacity not smaller than Ct to transmit the M samples, and thus allocates a transmission resource capable of transmitting the M samples to the terminal, and a size of the transmission resource is not smaller than Ct. In some embodiments, the size of the transmission resource is greater than Ct, and the size of the transmission resource is close to Ct.

In some embodiments, the first node may also send the coding block on a transmission resource configured by the second node.

In some embodiments, the first node may also send resource scheduling request information to the second node through an explicit transmission mode or an implicit transmission mode, where the resource scheduling request information is used to request a transmission resource. Furthermore, the first node may receive resource allocation information and determine a transmission resource for transmitting the data set according to the resource allocation information.

Exemplarily, the first node measures a reference signal resource to obtain the N samples, and selects M samples that meet a requirement from the N samples according to sample quality. Before the first node sends the M samples, the first node may first send resource request information, where the resource request information is used to request a transmission resource to transmit the M samples. The second node receives the resource request information and sends resource allocation information. The first node receives the resource allocation information of the second node, and sends M samples on a resource corresponding to the resource allocation information.

As an example, the first node may request a transmission resource in an implicit mode, for example, by performing a special cyclic redundancy check code in uplink transmission data, or transmitting a special padding bit in a transmission, where the special padding bit is used to request the second node to allocate a transmission resource.

In some embodiments, if a number of bits of the transmission resource configured by the second node is greater than a number of bits of the coding block, the first node may also send padding information or data or a signaling other than M samples on the transmission resource configured by the second node.

Exemplarily, the first node obtains the N samples by measuring a reference signal, and the second node may configure a periodic report or a semi-persistent report, and a transmission resource corresponding to the periodic report or semi-persistent report is configured based on a size of a resource for transmitting the N samples. However, the first node determines whether at least one sample meets a requirement through K thresholds and L parameters corresponding to the at least one sample, and a sample that meet the requirement is classified into the data set to be transmitted. M samples that meet a quality requirement are selected from the N samples, and the M samples are coded and modulated to obtain coded and modulated symbols. Furthermore, the first node may map the modulated symbols corresponding to the M samples onto a corresponding transmission resource in the periodic or semi-persistent report configured by the second node. A transmission resource corresponding to remaining (N-M) samples of transmission resources may be used to fill in special information, and the special information used for filling may be a coded and modulated symbol corresponding to an all-zero value or a specific value.

In some embodiments, in a case where a size relationship between a sample parameter of samples harvested in D slots and the K sample threshold groups does not meet a preset requirement (for example, a sample quality does not meet a preset quality requirement), the first signaling is sent to the second node. The first signaling is used to recommend to stopping a sending of a periodic reference signal. Alternatively, the first signaling is used to recommend to deactivate a sending of a semi-persistent reference signal.

Exemplarily, if the first node measures reference signals on D5 slots respectively in D5 slots to obtain D5 samples, and determines a sample quality in each slot according to the K thresholds and L sample parameters corresponding to a sample of each slot. If sample qualities of D6 slots in D5 samples does not meet the requirement, the first signaling is sent, and the first signaling is used to recommend the second node to stop a sending of a periodic reference signal, or to deactivate to send a semi-persistent reference signal. D5 and D6 are positive integers, and D6 is smaller than or equal to D5. D6 may be a configured value by the second node, or D5 and D6 may be values obtained by the first node according to, for example, simulation, actual measurement, experience, tables, etc.

In some embodiments, when a size relationship between sample parameters of samples harvested in D slots and K sample threshold groups meet the preset requirement (for example, a sample quality meets the preset quality requirement), a second signaling is sent to the second node. The second signaling is used to recommend to send a periodic reference signal; or the second signaling is used to recommend to activate a semi-persistent reference signal.

In an example, the first node may monitor a channel quality all the time, for example, by sending a periodic reference signal or other information such as a reference signal for channel measurement to obtain the channel quality, if channel qualities detected for K1 consecutive times are greater than a preset channel quality threshold value, at this time, the first node determines that a sample collection may be performed currently, and sends the second signaling to the second node. After the second node receives the second signaling, the second node determines whether needs to send a periodic or semi-persistent reference signal to the first node. If the second node sends a periodic or semi-persistent reference signal to the first node, the first node may obtain the above-mentioned data set according to a measurement for the received periodic or semi-persistent reference signal.

In some embodiments, the above sample may include sample parameters of P1 beams. If sample parameters of P2 beams do not meet a parameter threshold group, and sample parameters of P3 beams meet the parameter threshold group, then sample parameters of P4 beams in the sample are sent.

P1, P2, P3 and P4 are all positive integers, and P1 is equal to a sum of P2 and P3; the P4 beams are top P4 beams with largest sample parameter values among the P1 beams.

Exemplarily, if the samples collected by the first node include beam parameter information (i.e., a sample parameter (the sample parameter is a feature and/or label corresponding to a sample), such as L1-SINR, L1-RSRP, etc.) corresponding to C beams, and obtain a corresponding threshold group, such as a threshold TH1 or two thresholds including TH0 and TH1, and TH0 is smaller than TH1. When the sample parameter is greater than the threshold value TH1, it may be determined that the sample parameter meets the requirement. At this time, if C7 sample parameters among the C sample parameters meet the requirements and C8 sample parameters do not meet the requirements, C7+C8=M. As an example, if C7 is smaller than a preset threshold CO, for example, C0 is an integer value such as 4 or 5, the first node may send C7 largest measured beam parameter information (sample parameters), i.e., no beam prediction is performed. As another example, if C7 is greater than a preset threshold CO, the first node may send C0 largest measured beam parameter information (sample parameters) or predicted beam parameters.

In some embodiments, the first node may send a third signaling to the second node, where the third signaling is used to indicate a reason why a transmission performance of the first node is poor, including poor generalization performance of the model or a low channel quality.

Exemplarily, the third signaling may take a first value or a second value, the first value may be a non-zero value, the second value may be 0, or the first value may be True, and the second value may be False. When the third signaling takes the first value, the third signaling is used to indicate that the reason why the transmission performance of the first node is poor is that the generalization performance of the model is poor. Alternatively, when the third signaling takes the second value, the third signaling is used to indicate that the reason why the transmission performance of the first node is poor is that a channel quality is low.

Based on the above-mentioned embodiments, in this method, high-quality samples may be collected from detected samples as a data set for transmission and model training based on preset parameter thresholds and sample parameters, thereby improving the performance of the model. In addition, only samples with higher quality is transmitted, thus a feedback overhead required to transmit the data set may be reduced.

A data set receiving method is further provided in the present disclosure, the method is applied to a second node, as shown in FIG. 3, the method includes S201.

In S201, a data set is received, where the data set includes M samples, and the data set is determined from N samples based on K parameter threshold groups.

M, N and K are positive integers, and N is greater than or equal to M.

In some embodiments, the data set may be determined from the N samples based on the K parameter threshold groups and a sample parameter of a sample.

The sample parameter of the sample may include at least one of: a motion speed, an RSRP, an SINR, an MCS, a CQI, a confidence, a prediction probability, a cosine similarity, measurement time, inference time, location parameter information, beam parameter information, a throughput, a bit error rate or a block error rate.

Correspondingly, the above-mentioned K parameter threshold groups include at least one of: a motion speed threshold group, an RSRP threshold group, an SINR threshold group, an MCS threshold group, a CQI threshold group, a confidence threshold group, a prediction probability threshold group, a cosine similarity threshold group, a measurement time threshold group, an inference time threshold group, a location parameter information threshold group, a beam parameter information threshold group, a throughput threshold group, a bit error rate threshold group, or a block error rate threshold group. A threshold group includes one or more threshold values.

Exemplarily, the second node may send a reference signal resource in at least one reference signal resource or a reference signal resource set to the first node, so that the first node obtains the above-mentioned N samples by measuring the reference signal resource. Taking the second node being a base station and the first node being a terminal as an example, the base station sends a reference signal to the terminal; the terminal obtains channel matrix information H of a plurality of physical resource blocks by measuring the reference signal, and then acquires the above-mentioned plurality of samples.

In some embodiments, the second node may further send the K parameter threshold groups to the first node. Exemplarily, the K parameter threshold groups are determined according to at least one of: a received higher layer signaling and/or physical layer signaling; a capability of the first node; a model or a model identifier; a functionality or a functionality identifier; a scenario or a scenario identifier.

Exemplarily, the second node may determine the K threshold groups with the first node in a negotiation mode. Alternatively, the first node obtains the above-mentioned K threshold groups through, for example, engineering experience, or simulation testing, or actual measurement. Alternatively, K thresholds correspond to a model, and different models correspond to different K threshold groups. For example, values of K threshold groups corresponding to model 1 are different from values of K threshold groups corresponding to model 2. Alternatively, the K threshold groups correspond to an information processing mode, and different information processing modes correspond to different K threshold groups. For example, values of K threshold groups corresponding to information processing mode 1 are different from values of K threshold groups corresponding to information processing mode 2. Alternatively, the above-mentioned K threshold groups correspond to a functionality, different functions correspond to different K threshold groups, for example, values of K threshold groups corresponding to functionality 1 are different from values of K threshold groups corresponding to functionality 2. Alternatively, the K threshold groups correspond to terminal capability, and different terminal capabilities correspond to different K threshold groups. For example, values of K threshold groups corresponding to terminal capability 1 are different from values of K threshold groups corresponding to terminal capability 2. In some embodiments, a parameter threshold group may include a first threshold value. The data set may be determined based on a size relationship between the first threshold value and a value of a sample parameter corresponding to the first threshold value. In some embodiments, the sample parameter may include a plurality of values, and the data set may be determined based on a size relationship between the first threshold value and various values of the plurality of values of the sample parameter corresponding to the first threshold value.

As an example, samples in the data set may be determined based on a sample quality of each sample in the N samples, and the sample quality may be determined based on a size relationship between the first threshold value and a value of a sample parameter corresponding to the first threshold value. Of course, a sample that meets the preset quality requirement is included in the above data set.

As another example, the sample parameter may include a plurality of values. A sample in the data set may be determined based on a sample quality of at least one sample among the N samples, and the sample quality may be determined based on a size relationship between the first threshold value and a value of a sample parameter corresponding to the first threshold value. Of course, a sample that meets the preset quality requirement is included in the above data set.

In some embodiments, a parameter threshold group may further include a plurality of threshold values. For example, if the parameter threshold value includes a second threshold value and a third threshold value, the data set may be determined based on a size relationship among the second threshold value, the third threshold value and a value of a target sample parameter. In some embodiments, the sample parameter may include the plurality of values, and the data set may be determined based on the size relationship among the second threshold value, the third threshold value, and respective values of the plurality of values of the target sample parameter.

In some embodiments, there may be a plurality of sample parameters, and further the sample quality of the sample may be determined according to a size relationship among the plurality of sample parameters and a corresponding parameter threshold group.

In some embodiments, a parameter threshold group corresponding to a sample parameter may include one or more threshold values. Similarly, a sample parameter may also include one or more values, which will not be repeated herein.

In some embodiments, whether a sample of a sample group is included in the data set may be determined based on at least one of the following:
in response to that sample parameters of all samples in the sample group meet a preset requirement with the K sample threshold groups, it is determined that the sample group is included in the data set;
in response to that a sample parameter of at least one sample in the sample group does not meet a preset requirement with the K sample threshold groups, the sample group is not included in the data set;
in response to that sample parameters corresponding to C1 samples of the sample group corresponding to at least one sample among the N samples do not meet the preset requirement, it is determined that a sample of the sample group is not included in the data set, and C1 is a positive integer;
whether the sample group is included in the data set is determined based on whether any time-adjacent samples in the sample group meet a time constraint relationship. Exemplarily, if any time-adjacent samples in the sample group do not meet the time constraint relationship, it is determined that the sample group is not included in the data set; or any time-adjacent samples in the sample group meet the time constraint relationship, it is determined that the sample group is included in the data set;
whether the sample group is included in the data set is determined based on whether any adjacent samples in frequency domain in the sample group meet a frequency domain constraint relationship. Exemplarily, if any adjacent samples in frequency domain in the sample group do not meet the frequency domain constraint relationship, it is determined that the sample group is not included in the data set; or if any adjacent samples in frequency domain in the sample group meet the frequency domain constraint relationship, it is determined that the sample group is included in the data set;
whether the sample group is included in the data set is determined based on whether any adjacent samples in spatial domain in the sample group meet a spatial domain constraint relationship. Exemplarily, if any adjacent samples in spatial domain in the sample group do not meet the spatial domain constraint relationship, it is determined that the sample group is not included in the data set; or if any adjacent samples in spatial domain in the sample group meet the spatial domain constraint relationship, it is determined that the sample group is included in the data set.

In some embodiments, the second node may further receive resource scheduling request information sent from the first node to the second node through an explicit transmission mode or an implicit transmission mode, where the resource scheduling request information is used to request a transmission resource. Furthermore, the second node may send resource allocation information to the first node, so that the first node may determine a transmission resource for transmitting the data set based on the resource allocation information.

Furthermore, the second node may receive the above-mentioned data set on the transmission resource determined based on the resource allocation information.

In some embodiments, the second node may receive a first signaling, where the first signaling is used to recommend the second node to stop a sending of a periodic reference signal, or deactivate to send a semi-persistent reference signal. Furthermore, the second node may further determine whether to send a periodic reference signal or a semi-persistent reference signal to the first node based on the first signaling.

A second signaling may be sent in a case where sample parameters of samples collected by the first node in the D slots do not meet the preset requirement (e.g., a sample quality does not meet the preset quality requirement) with the K sample threshold groups.

In some embodiments, the second node may also receive the second signaling, where the second signaling is used to recommend to send a periodic reference signal; or the second signaling is used to recommend to activate a semi-persistent reference signal. Furthermore, the second node may further determine whether to send a periodic reference signal or a semi-persistent reference signal to the first node based on the second signaling.

The second signaling may be sent in a case where the sample parameters of the samples collected by the first node in the D slots meet the preset requirement (e.g., the sample quality meets the preset quality requirement) with the K sample threshold groups.

In some embodiments, the second node may further receive sample parameters of P4 beams in the samples. The above-mentioned samples may include sample parameters of P1 beams, sample parameters of P2 beams do not meet the parameter threshold group, and sample parameters of P3 beams meet the parameter threshold group. P1, P2, P3 and P4 are all positive integers, and P1 is equal to a sum of P2 and P3, the P4 beams are top P4 beams with largest sample parameter values among the P1 beams.

In some embodiments, the second node may further receive a third signaling, where the third signaling is used to indicate a reason why a transmission performance of the first node is poor. The reason for poor transmission performance include poor generalization of the model or low channel quality. In addition, detailed description for S201 may refer to the description for S101-S103 above, which may not be repeated herein.

In some embodiments, the base station merges data sets collected for one or more times into a large data set. The large data set is stored locally for use in training, fine-tuning or testing of the base station itself. The collected data set may also be sent to other third-party servers, base stations or terminals for training or fine-tuning a model.

The foregoing mainly introduces the solutions provided by the present disclosure from the perspective of interaction between various nodes. It can be understood that, in order to implement the above-mentioned functions, the various nodes (e.g., the second node and the first node) include corresponding hardware structures and/or software modules for performing the various functions. Those skilled in the art should easily realize that the present disclosure may be implemented in the form of hardware or a combination of hardware and computer software in combination with algorithms and steps described in the embodiments disclosed in the present disclosure. Whether a certain functionality is implemented by hardware or by computer software driving hardware depends on the specific application and design constraint conditions of the technical solutions. Professional technicians may use different methods to implement the described functions for each specific application, but such implementation should not be considered beyond the scope of the present disclosure.

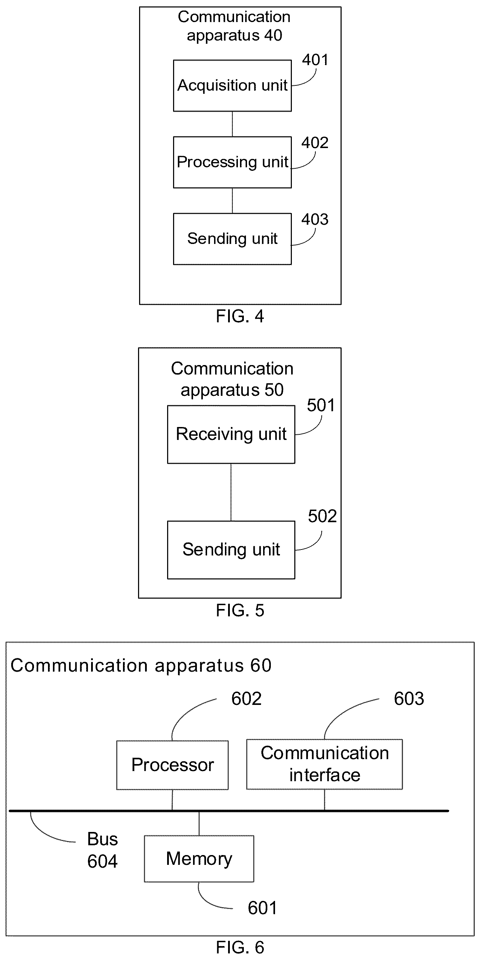

FIG. 4 is a schematic diagram of a composition of a communication apparatus according to some embodiments. As shown in FIG. 4, the communication apparatus 40 includes an acquisition unit 401, a processing unit 402 and a sending unit 403. The communication apparatus 40 may be the above-mentioned first node or a chip in the first node. In response to that the communication apparatus 40 is configured to implement the functions of the first node in the above-mentioned embodiments, various units, for example, are configured to implement the following functions.

In some embodiments, the acquisition unit 401 is configured to acquire N samples and K parameter threshold groups. The processing unit 402 is configured to determine a data set from the N samples according to the K parameter threshold groups, where the data set includes M samples; M, N and K are positive integers, and N is greater than or equal to M. The sending unit 403 is configured to send the data set.

In some embodiments, the processing unit 402 is configured to determine the data set according to the K parameter threshold groups and a sample parameter corresponding to the N samples. The sample parameter includes at least one of: a motion speed, a reference signal received power (RSRP), a signal to interference plus noise ratio (SINR), a modulation and coding scheme (MCS), a channel quality indicator (CQI), a confidence, a prediction probability, a cosine similarity, measurement time, inference time, location parameter information, beam parameter information, a throughput, a bit error rate or a block error rate.

In some embodiments, a parameter threshold group includes at least one of: a motion speed threshold group, an RSRP threshold group, an SINR threshold group, an MCS threshold group, a CQI threshold group, a confidence threshold group, a prediction probability threshold group, a cosine similarity threshold group, a measurement time threshold group, an inference time threshold group, a location parameter information threshold group, a beam parameter information threshold group, a throughput threshold group, a bit error rate threshold group, or a block error rate threshold group.

In some embodiments, the processing unit 402 is configured to: determine whether the at least one sample is included in the data set according to a comparison result between the K parameter threshold groups and K sample parameters corresponding to at least one sample among the N samples. Exemplarily, the at least one sample is at least one sample among the N samples.

In some embodiments, the processing unit 402 is configured to: for at least one sample, determine whether the at least one sample is included in the data set according to at least one parameter threshold group among the K parameter threshold groups and at least one sample parameter of K sample parameters corresponding to the at least one sample. Exemplarily, the at least one sample is at least one sample among the N samples.

In some embodiments, the processing unit 402 is configured to: a parameter threshold group includes a first threshold value, and determine whether the at least one sample is included in the data set according to a first threshold value and a value of a sample parameter corresponding to at least one sample. Exemplarily, the at least one sample is at least one sample among the N samples.

In some embodiments, the processing unit 402 is configured to: the parameter threshold group includes the first threshold value, and determine whether the at least one sample is included in the data set according to the first threshold value and C values of a sample parameter corresponding to the at least one sample, where C is a positive integer. Exemplarily, the at least one sample is at least one sample among the N samples.

In some embodiments, the processing unit 402 is configured to: the parameter threshold group includes a second threshold value and a third threshold value, and determine whether the at least one sample is included in the data set according to the second threshold value, the third threshold value, and a value of a sample parameter corresponding to the at least one sample. Exemplarily, the at least one sample is at least one sample among the N samples.

In some embodiments, the processing unit 402 is configured to: the parameter threshold group includes a second threshold value and a third threshold value, and determine whether at least one sample is included in the data set according to the second threshold value, the third threshold value and C values of a sample parameter corresponding to the at least one sample.

In some embodiments, the C values of the sample parameter correspond to C periods of measurement time; or the C values of the sample parameter correspond to C beams.

In some embodiments, the N samples include at least one sample group, and a sample group includes at least one sample. The processing unit 402 is further configured to determine whether a sample of a sample group is included in the data set according to the K parameter threshold groups and a sample parameter corresponding to at least one sample of the sample group.

In some embodiments, the processing unit 402 is configured to perform at least one operation of: in response to that sample parameters of all samples of the sample group meet a preset requirement with the K sample threshold groups, determining that the sample group is included in the data set; in response to that a sample parameter of the at least one sample in the sample group does not meet a preset requirement with the K sample threshold groups, determine that the sample group is not included in the data set; in response to that sample parameters corresponding to C1 samples of the sample group corresponding to at least one sample of the sample group do not meet a preset requirement, determine that a sample of the sample group is not included in the data set, where C1 is a positive integer; determine that the sample group is not included in the data set in response to that any time-adjacent samples in the sample group do not meet a time constraint relationship; determine that the sample group is not included in the data set in response to that any adjacent samples in frequency domain in the sample group do not meet a frequency domain constraint relationship; determine that the sample group is not included in the data set in response to that any adjacent samples in spatial domain in the sample group do not meet a spatial domain constraint relationship.

In some embodiments, whether two adjacent samples in time domain meet the time domain constraint relationship includes at least one of the following:
in a sample group, a slot or a sub-slot corresponding to a first parameter set of a sample and a slot or a sub-slot corresponding to a first parameter set of another sample adjacent to the sample in a time location are at adjacent time locations;
in the sample group, a slot or a sub-slot corresponding to a second parameter set of a sample and a slot or a sub-slot corresponding to a second parameter set of another sample adjacent to the sample in a time location are at adjacent time locations;
in the sample group, an interval between a slot or a sub-slot corresponding to a first parameter set of a sample and a slot or a sub-slot corresponding to a first parameter set of another sample adjacent to the sample in a time location is shorter than N time domain units;
in the sample group, an interval between a slot or a sub-slot corresponding to a second parameter set of a sample and a slot or a sub-slot corresponding to a second parameter set of another sample adjacent to the sample in a time location is shorter than N time domain units;
in the sample group, a slot or a sub-slot of a reference signal corresponding to a sample and a slot or a sub-slot of a reference signal corresponding to another sample adjacent to the sample in a time location are at adjacent time locations;
in the sample group, an interval between a slot or a sub-slot of a reference signal corresponding to a sample and a slot or a sub-slot of a reference signal corresponding to another sample adjacent to the sample in a time location is shorter than N time units;
in the sample group, a slot or a sub-slot corresponding to a sample and a slot or a sub-slot corresponding to another sample adjacent to the sample in a time location are at adjacent time locations; or
in the sample group, an interval between a slot or a sub-slot corresponding to a sample and a slot or a sub-slot of corresponding to another sample adjacent to the sample in a time location is shorter than N time units.

In this embodiment, a time unit may be a slot, a sub-slot, or a symbol group; values of a threshold and a preset threshold may be determined according to actual conditions, which are not limited herein.

In some embodiments, whether two adjacent samples in frequency domain meet the frequency domain constraint relationship includes at least one of the following:
in a sample group, a frequency domain location corresponding to a first parameter set of a sample and a frequency domain location corresponding to a first parameter set of another sample adjacent to the sample in a frequency domain location are adjacent to each other;
in the sample group, a frequency domain location corresponding to a second parameter set of a sample and a frequency domain location corresponding to a second parameter set of another sample adjacent to the sample in a frequency domain location are adjacent to each other;
in the sample group, an interval between a frequency domain location corresponding to a first parameter set of a sample and a frequency domain location corresponding to a first parameter set of another sample adjacent to the sample in a frequency domain location is smaller than N frequency domain units;
in the sample group, an interval between a frequency domain location corresponding to a second parameter set of a sample and a frequency domain location corresponding to a second parameter set of another sample adjacent to the sample in a frequency domain location is smaller than N frequency domain units;
in the sample group, a difference between a frequency domain location of a reference signal corresponding to a sample and a frequency domain location of a reference signal corresponding to another sample adjacent to the sample in a frequency domain location is smaller than N frequency domain units;
in the sample group, a difference between a frequency domain location of a reference signal corresponding to a sample and a frequency domain location of a reference signal corresponding to another sample adjacent to the sample in a frequency domain location is smaller than N frequency domain units;
in the sample group, a frequency domain location corresponding to a sample and a frequency domain location corresponding to another sample adjacent to the sample in a frequency domain location are adjacent to each other; or
in the sample group, a difference between a frequency domain location corresponding to a sample and a frequency domain location corresponding to another sample adjacent to the sample in a frequency domain location is smaller than N frequency domain units.

In this embodiment, a frequency domain unit may be a subcarrier spacing, a PRB, a sub-band or a PRB group, etc., where PRB refers to a physical resource block within a BWP (Bandwidth Part), and a PRB group is a set of multiple PRBs in NR; values of a threshold and a preset threshold may be determined according to actual conditions, which are not limited herein.

Similarly, in some embodiments, whether two adjacent samples in spatial domain meet the spatial domain constraint relationship includes at least one of the following:
in a sample group, a spatial domain location corresponding to a first parameter set of a sample and a spatial domain location corresponding to a first parameter set of another sample adjacent to the sample in a spatial domain location are adjacent to each other;
in the sample group, a spatial domain location corresponding to a second parameter set of a sample and a spatial domain location corresponding to a second parameter set of another sample adjacent to the sample in a spatial domain location are adjacent to each other;
in the sample group, an interval between a spatial domain location corresponding to a first parameter set of a sample and a spatial domain location corresponding to a first parameter set of another sample adjacent to the sample in a spatial domain location is smaller than N spatial domain units;
in the sample group, an interval between a spatial domain location corresponding to a second parameter set of a sample and a spatial domain location corresponding to a second parameter set of another sample adjacent to the sample in a spatial domain location is smaller than N spatial domain units;
in the sample group, a difference between a spatial domain location of a reference signal corresponding to a sample and a spatial domain location of a reference signal corresponding to another sample adjacent to the sample in a spatial domain location is smaller than N spatial domain units;
in the sample group, a difference between a spatial domain location of a reference signal corresponding to a sample and a spatial domain location of a reference signal corresponding to another sample adjacent to the sample in a spatial domain location is smaller than N spatial domain units;
in the sample group, a spatial domain location corresponding to a sample and a spatial domain location corresponding to another sample adjacent to the sample in a spatial domain location are adjacent to each other; or
in the sample group, a difference between a spatial domain location corresponding to a sample and a spatial domain location corresponding to another sample adjacent to the sample in a spatial domain location is smaller than N spatial domain units.

In this embodiment, a spatial domain unit may be a sending antenna, a receiving antenna, a sending beam, a receiving beam, a sending antenna index or a receiving antenna index, a sending beam index or a receiving beam index; values of a threshold and a preset threshold may be determined according to actual conditions, which are not limited herein.

In some embodiments, a number of samples included in a sample group is determined according to a measurement window size and/or a prediction window size.

In some embodiments, the K parameter threshold groups are determined based on at least one of: a received higher layer signaling and/or physical layer signaling; a capability of the first node; a model or a model identifier; a functionality or a functionality identifier; a scenario or a scenario identifier.

In some embodiments, the sending unit 401 is further configured to send a parameter related to a size of the data set, where the parameter related to the size of the data set includes a number of samples included in the data set, or a parameter of a size of a coding block corresponding to the data set.

In some embodiments, the processing unit 402 is further configured to encode the data set into a coding block, the acquisition unit 401 is further configured to acquire a transmission resource for sending the data set, and the sending unit 403 is further configured to send the coding block corresponding to the data set on the transmission resource.

In some embodiments, in response to that a number of bits corresponding to the transmission resource is greater than a number of bits of the coding block, the sending unit 401 is further configured to send padding information, or data or a signaling other than the M samples on a remaining resource of the transmission resource.

In some embodiments, the sending unit 403 is further configured to send resource scheduling request information through an explicit transmission mode or an implicit transmission mode.

In some embodiments, the acquisition unit 401 is further configured to receive resource allocation information. The processing unit 402 is further configured to determine a transmission resource for transmitting the data set according to the resource allocation information.

In some embodiments, the sending unit 403 is further configured to send a first signaling in response to that sample parameters corresponding to D samples acquired in D slots do not meet a preset requirement with the K sample threshold groups, where D is a positive integer; the first signaling is used to recommend to stop a sending of a periodic reference signal; or the first signaling is used to recommend to deactivate a sending of a semi-persistent reference signal.

In some embodiments, the sending unit 403 is further configured to send a second signaling in response to that sample parameters corresponding to D samples acquired in D slots meet a preset requirement with the K sample threshold groups, where the second signaling is used to recommend to send a periodic reference signal; or the second signaling is used to recommend to activate a semi-persistent reference signal.

In some embodiments, the first sample parameter set corresponding to a sample includes P1 parameters, in response to that P2 parameters among the P1 parameters meet a preset requirement with the K sample threshold groups, largest P3 parameters in the first value parameter set are fed back.

FIG. 5 is a schematic diagram of a composition of another communication apparatus according to some embodiments. As shown in FIG. 5, the communication apparatus includes a receiving unit 501, and may further include a sending unit 502. The communication apparatus 50 may be the above-mentioned second node or a chip in the second node. In response to that the communication apparatus 50 is configured to implement the functions of the second node in the above-mentioned embodiments, various units, for example, are configured to implement the following functions.

In some embodiments, the receiving unit 501 is configured to receive a data set, the data set includes M samples, the data set is determined from N samples based on K parameter threshold groups, where M, N and K are positive integers, and N is greater than or equal to M.

In some embodiments, the data set is determined from N samples based on the K parameter threshold groups and sample parameters of the N samples, and a sample parameter include at least one of: a motion speed, a reference signal received power (RSRP), a signal to interference plus noise ratio (SINR), a modulation and coding scheme (MCS), a channel quality indicator (CQI), a confidence, a prediction probability, a cosine similarity, measurement time, inference time, location parameter information, or beam parameter information.

In some embodiments, the K parameter threshold groups include at least one of: a motion speed threshold group, an RSRP threshold group, an SINR threshold group, an MCS threshold group, a CQI threshold group, a confidence threshold group, a prediction probability threshold group, a cosine similarity threshold group, a measurement time threshold group, an inference time threshold group, a location parameter information threshold group, or a beam parameter information threshold group.

In some embodiments, for at least one sample among the N samples, whether the data set includes the at least one sample is determined based on at least one parameter threshold group among the K parameter threshold groups and at least one sample parameter of K sample parameters corresponding to the at least one sample.

In some embodiments, a parameter threshold group includes a first threshold value, and whether the data set includes at least one sample is determined based on the first threshold value and a value of a sample parameter corresponding to the first threshold value. Exemplarily, the at least one sample is at least one sample among the N samples.

In some embodiments, a parameter threshold group includes a second threshold value and a third threshold value, and the data set is determined based on the second threshold value, the third threshold value and a value of a sample parameter.

In some embodiments, the receiving unit 501 is further configured to receive resource scheduling request information sent based on an explicit transmission mode or an implicit transmission mode. The sending unit 502 is configured to send resource allocation information based on the received resource scheduling request information, where the resource allocation information is used to determine a transmission resource for transmitting the data set.

It should be noted that the units in FIG. 4 and FIG. 5 may also be referred to as modules. For example, a sending unit may be referred to as a sending module. In addition, in the embodiments shown in FIG. 4 and FIG. 5, the names of the various units may not be the names shown in the figures. For example, the sending unit may also be referred to as a communication unit, and the receiving unit may also be referred to as a communication unit.

If the various units in FIG. 4 and FIG. 5 are implemented in the form of the software functional unit and sold or used as independent products, they may be stored in a computer-readable storage medium. Based on this understanding, the technical solutions of the present disclosure may be essentially, or a part of the technical solutions of the present disclosure that contributes to the related technologies, or all or a portion of the technical solutions of the present disclosure may be, embodied in the form of a software product, and the computer software product may be stored in a storage medium including couples of instructions to enable a computer device (may be a personal computer, a server, a network device, etc.) or a processor to perform all or a portion of steps of the method in the various embodiments of the present disclosure. The storage medium for storing a computer software product includes various types of media capable of storing program codes, such as a USB flash drive, a mobile disk, a read-only memory (ROM), a random-access memory (RAM), a magnetic disk, or an optical disk.

In a case of implementing the functions of the above-mentioned integrated modules in the form of hardware, a structural schematic diagram of a communication apparatus is provided in the embodiments of the present disclosure, and the communication apparatus may be the above-mentioned communication apparatus 40 or communication apparatus 50. As shown in FIG. 6, the communication apparatus 60 includes a memory 601, a processor 602, a communication interface 603, and a bus 604.

The memory 601 may be a read-only memory (ROM) or other types of static storage devices that can store static information and instructions, a random access memory (RAM), or other types of dynamic storage devices that can store information and instructions, or an electrically erasable programmable read-only memory (EEPROM), a magnetic disk storage media or any other magnetic storage devices, or any other medium that can be used to carry or store desired program codes with a form of instructions or data and can be accessed by a computer, which is not limited thereto.

The processor 602 may implement or perform various exemplary logical blocks, modules and circuits described in combination with the present disclosure. The processor 602 may be a central processor, a general-purpose processor, a digital signal processor, an application specific integrated circuit, a field programmable gate array, or other programmable logic component, a transistor logic component, a hardware assembly, or any combination thereof. The processor 602 may implement or execute various illustrative logical blocks, modules and circuits described in conjunction with the disclosed contents the present disclosure. The processor 602 may also be a combination that implements computing functions, for example, the processor 602 includes a combination of one or more microprocessors, a combination of a DSP (digital signal processor) and a microprocessor, or the like.

The communication interface 603 is configured to connect with other devices through a communication network. The communication network may be the Ethernet, a wireless access network, a wireless Local Area Networks (WLAN), or the like.

As a possible implementation, the memory 601 may exist independently from the processor 602, and the memory 601 may be connected to the processor 602 through the bus 604 for storing instructions or program codes. In response to that the processor 602 invokes and executes instructions or program codes stored in the memory 601, the processor 602 may implement the information processing mode determination method provided in the embodiments of the present disclosure.

In another implementation, the memory 601 may be integrated with the processor 602.

The bus 604 may be an extended industry standard architecture (EISA) bus, or the like. The bus 604 may be classified as an address bus, a data bus, a control bus, or the like. For ease of representation, only one bold line is used in FIG. 6 for representing the bus 604, but it does not mean that there is only one bus or one type of bus.

Through the description of the above implementations, those of ordinary skill in the art can clearly understand that for the convenience and simplicity of the description, the division of the above functional modules is given merely as an example. In practical applications, the above functions can be allocated to different functional modules according to requirements, that is, the internal structure of the second node or first node may be divided into different functional modules to complete all or part of the functions described above.

A computer-readable storage medium is further provided in the embodiments of the present disclosure. All or part of the processes in the above method embodiments may be implemented by relevant information of an information hardware instructed by computer instructions. The programs may be stored in the above-mentioned computer-readable storage medium, and when executed, the programs may include the processes as described in the above method embodiments. The computer-readable storage medium may be an internal storage in any of the aforementioned embodiments. The above-mentioned computer-readable storage medium may also be an external storage device of the above-mentioned second node or first node, such as a plug-in hard disk, a smart media card (SMC), a secure digital (SD) card, a flash card, etc., equipped on the above-mentioned second node or first node. Furthermore, the above-mentioned computer-readable storage medium may include both an internal storage unit and an external storage device of the above-mentioned second node or first node. The above-mentioned computer-readable storage medium is configured to store the above-mentioned computer programs and other programs and data required by the above-mentioned second node or first node. The above-mentioned computer-readable storage medium may further be configured to temporarily store data that has been output or is to be output. The readable storage medium includes a non-transitory computer-readable storage medium.

A computer program product is further provided in the embodiments of the present disclosure. The computer program product includes computer programs that, when run on a computer, enable the computer to execute any one of the information processing mode determination method provided in the above-mentioned embodiments.

Although the present disclosure is described herein in conjunction with various embodiments, other variations of the disclosed embodiments may be understood and implemented by those skilled in the art by viewing the accompanying drawings, the disclosed contents, and the attached claims during the implementation of the present disclosure claimed to be protected. In the claims, "comprise/comprises/comprising" does not exclude other components or steps, and "a/an" or "one" does not exclude a number of a plurality. A single processor or other units may implement couples of functions listed in the claims. Some measures are recorded in different dependent claims, but this does not mean that these measures cannot be combined to produce good results.

Although the present disclosure is described in conjunction with features and embodiments thereof, obviously, various modifications and combinations may be made thereto without departing from the spirit and scope of the present disclosure. Accordingly, the specification and accompanying drawings herein are merely exemplary illustration of the present disclosure defined by the claims and are deemed to cover any and all modifications, variations, combinations or equivalents within the scope of the present disclosure. Obviously, those skilled in the art can make various changes and modifications to the present disclosure without departing from the spirit and scope of the present disclosure. In this way, if these modifications and variations of the present disclosure fall within the scope of the claims of the present disclosure and their equivalent technologies, the present disclosure is also intended to include these modifications and variations.

The foregoing descriptions are merely specific implementations of the present disclosure, but the protection scope of the present disclosure is not limited thereto. Any variations or replacements within the technical scope disclosed in the present disclosure shall fall within the protection scope of the present disclosure. Therefore, the protection scope of the present disclosure shall be subject to the protection scope of the claims.

## Claims

1. A data set sending method, **characterized in that** the method is applied to a first node, and comprises:
acquiring N samples and K parameter threshold groups;
determining a data set from the N samples according to the K parameter threshold groups, wherein the data set comprises M samples; M, N and K are positive integers, N is greater than or equal to M; and
sending the data set.

2. The method according to claim 1, wherein determining the data set from the N samples according to the K parameter threshold groups comprises:
determining the data set according to the K parameter threshold groups and a sample parameter corresponding to the N samples;
wherein the sample parameter comprises at least one of: a motion speed, a reference signal received power (RSRP), a signal to interference plus noise ratio (SINR), a modulation and coding scheme (MCS), a channel quality indicator (CQI), a confidence, a prediction probability, a cosine similarity, measurement time, inference time, location parameter information, beam parameter information, a throughput, a bit error rate or a block error rate.

3. The method according to claim 1, wherein a parameter threshold group comprises at least one of: a motion speed threshold group, an RSRP threshold group, an SINR threshold group, an MCS threshold group, a CQI threshold group, a confidence threshold group, a prediction probability threshold group, a cosine similarity threshold group, a measurement time threshold group, an inference time threshold group, a location parameter information threshold group, a beam parameter information threshold group, a throughput threshold group, a bit error rate threshold group, or a block error rate threshold group.

4. The method according to claim 2, wherein determining the data set according to the K parameter threshold groups and the sample parameter corresponding to the N samples comprises:
determining, according to a comparison result between the K parameter threshold groups and K sample parameters corresponding to at least one sample among the N samples, whether the at least one sample is included in the data set.

5. The method according to claim 2, wherein determining the data set according to the K parameter threshold groups and the sample parameter corresponding to the N samples comprises:
determining, according to at least one parameter threshold group among the K parameter threshold groups and at least one sample parameter of K sample parameters corresponding to at least one sample among the N samples, whether the at least one sample is included in the data set.

6. The method according to claim 2, wherein determining the data set according to the K parameter threshold groups and the sample parameter corresponding to the N samples comprises:
determining, according to a first threshold value and a value of a sample parameter corresponding to at least one sample among the N samples, whether the at least one sample is included in the data set, wherein the parameter threshold group comprises the first threshold value.

7. The method according to claim 2, wherein determining the data set according to the K parameter threshold groups and the sample parameter corresponding to the N samples comprises:
determining, according to a first threshold value and C values of a sample parameter corresponding to at least one sample among the N samples, whether the at least one sample is included in the data set, wherein C is a positive integer, and the parameter threshold group comprises the first threshold value.

8. The method according to claim 2, wherein determining the data set according to the K parameter threshold groups and the sample parameter corresponding to the N samples comprises:
determining, according to a second threshold value, a third threshold value, and a value of a sample parameter corresponding to at least one sample among the N samples, whether the at least one sample is included in the data set, wherein the parameter threshold group comprises the second threshold value and the third threshold value.

9. The method according to claim 2, wherein determining the data set according to the K parameter threshold groups and the sample parameter corresponding to the N samples comprises:
determining, according to a second threshold value, a third threshold value, and C values of a sample parameter corresponding to at least one sample among the N samples, whether the at least one sample is included in the data set, wherein C is a positive integer, and the parameter threshold group comprises the second threshold value and the third threshold value.

10. The method according to claim 7 or 9, wherein the C values of the sample parameter correspond to C periods of measurement time; or the C values of the sample parameter correspond to C beams.

11. The method according to claim 1, wherein the N samples comprises at least one sample group, and the method further comprises:
determining, according to the K parameter threshold groups and a sample parameter corresponding to at least one sample of the sample group, whether a sample of the sample group is included in the data set.

12. The method according to claim 11, wherein determining, according to the K parameter threshold groups and the sample parameter corresponding to the at least one sample of the sample group, whether the sample of the sample group is included in the data set comprises at least one of:
in response to that sample parameters of all samples of the sample group meet a preset requirement with the K sample threshold groups, determining that the sample group is included in the data set;
in response to that a sample parameter of the at least one sample in the sample group does not meet a preset requirement with the K sample threshold groups, determining that the sample group is not included in the data set;
in response to that sample parameters corresponding to C1 samples of the sample group corresponding to at least one sample of the sample group do not meet a preset requirement, determining that a sample of the sample group is not included in the data set, wherein C1 is a positive integer;
determining whether the sample group is included in the data set based on whether any time-adjacent samples in the sample group meet a time constraint relationship;
determining whether the sample group is included in the data set based on whether any adjacent samples in frequency domain in the sample group meet a frequency domain constraint relationship;
determining whether the sample group is included in the data set based on whether any adjacent samples in spatial domain in the sample group meet a spatial domain constraint relationship.

13. The method according to claim **11,** wherein a number of samples included in the sample group is determined according to a measurement window size and/or a prediction window size.

14. The method according to claim 1, wherein the K parameter threshold groups are determined according to at least one of:
a received higher layer signaling and/or physical layer signaling;
a capability of the first node;
a model or a model identifier;
a functionality or a functionality identifier;
a scenario or a scenario identifier.

15. The method according to claim 1, further comprising:
sending a parameter related to a size of the data set, wherein the parameter related to the size of the data set comprises a number of samples included in the data set, or a parameter of a size of a coding block corresponding to the data set.

16. The method according to claim 1, wherein the sending the data set comprises:
encoding the data set into a coding block;
acquiring a transmission resource for sending the data set, and sending the coding block corresponding to the data set on the transmission resource.

17. The method according to claim 16, further comprising:
in response to that a number of bits corresponding to the transmission resource is greater than a number of bits of the coding block, sending padding information, or data or a signaling other than the M samples on a remaining resource of the transmission resource.

18. The method according to claim 1, wherein before sending the data set, the method further comprises:
sending resource scheduling request information through an explicit transmission mode or an implicit transmission mode.

19. The method according to claim 18, further comprising:
receiving resource allocation information; and
determining a transmission resource for transmitting the data set according to the resource allocation information.

20. The method according to claim 1, further comprising:
in response to that sample parameters corresponding to D samples acquired in D slots do not meet a preset requirement with the K sample threshold groups, sending a first signaling, wherein D is a positive integer; wherein the first signaling is used to recommend to stop a sending of a periodic reference signal; or the first signaling is used to recommend to deactivate a sending of a semi-persistent reference signal.

21. The method according to claim 1, further comprising:
in response to that sample parameters corresponding to D samples acquired in D slots meet a preset requirement with the K sample threshold groups, sending a second signaling, wherein the second signaling is used to recommend to send a periodic reference signal; or the second signaling is used to recommend to activate a semi-persistent reference signal.

22. The method according to claim 1,
wherein a first sample parameter set corresponding to a sample comprises **P1** parameters, and the method further comprises: in response to that P2 parameters among the **P1** parameters meet a preset requirement with the K sample threshold groups, feeding back largest P3 parameters in the first value parameter set.

23. A data set receiving method, **characterized in that** the method is applied to a second node, and comprises:
receiving a data set, wherein the data set comprises M samples, wherein the data set is determined from N samples based on K parameter threshold groups, M, N and K are positive integers, and N is greater than or equal to M.

24. The method according to claim 23, wherein the data set is determined from N samples based on the K parameter threshold groups and sample parameters of the N samples; wherein a sample parameter comprises at least one of: a motion speed, a reference signal received power (RSRP), a signal to interference plus noise ratio (SINR), a modulation and coding scheme (MCS), a channel quality indicator (CQI), a confidence, a prediction probability, a cosine similarity, measurement time, inference time, location parameter information, beam parameter information, a throughput, a bit error rate or a block error rate.

25. The method according to claim 23, wherein the K parameter threshold groups comprise at least one of: a motion speed threshold group, an RSRP threshold group, an SINR threshold group, an MCS threshold group, a CQI threshold group, a confidence threshold group, a prediction probability threshold group, a cosine similarity threshold group, a measurement time threshold group, an inference time threshold group, a location parameter information threshold group, a beam parameter information threshold group, a throughput threshold group, a bit error rate threshold group, or a block error rate threshold group.

26. The method according to claim 24, wherein for at least one sample among the N samples, whether the data set includes the at least one sample is determined based on at least one parameter threshold group among the K parameter threshold groups and at least one sample parameter of K sample parameters corresponding to the at least one sample.

27. The method according to claim 24, wherein for at least one sample among the N samples, the parameter threshold group comprises a first threshold value, and whether the data set includes the at least one sample is determined based on the first threshold value and a value of a sample parameter corresponding to the at least one sample.

28. A communication system, wherein the communication system comprises at least one first node and at least one second node, a first node is configured to perform the method according to any one of claims 1 to 22, and a second node is configured to perform the method according to any one of claims 23 to 27.

29. A communication apparatus, **characterized by** comprising: a memory and a processor, wherein the memory is coupled to the processor, the memory is configured to store instructions executable for the processor, and the processor is configured, upon the instructions being executed, to perform the method according to any one of claims 1 to 27.

30. A computer-readable storage medium, wherein computer instructions are stored on the computer-readable storage medium, in response that the computer instructions are executed on a communication apparatus, the communication apparatus is enabled to perform the method according to any one claims 1 to 27.
